(19) Europäisches Patentamt / European Patent Office / Office européen des brevets

(11) **EP 3 646 401 B1**

(12) **EUROPÄISCHE PATENTSCHRIFT**

(45) Veröffentlichungstag und Bekanntmachung des Hinweises auf die Patenterteilung:
**15.04.2026   Patentblatt 2026/16**

(21) Anmeldenummer: **18740123.7**

(22) Anmeldetag: **28.06.2018**

(51) Internationale Patentklassifikation (IPC):
*H01M 4/38* (2006.01)     *H01M 4/133* (2010.01)
*H01M 4/134* (2010.01)     *H01M 4/1395* (2010.01)
*H01M 4/36* (2006.01)     *H01M 4/62* (2006.01)
*H01G 11/24* (2013.01)     *H01G 11/38* (2013.01)
*H01G 11/42* (2013.01)     *H01G 11/50* (2013.01)
*H01M 4/04* (2006.01)     *H01M 4/02* (2006.01)
H01M 10/054 (2010.01)     H01M 10/052 (2010.01)
H01M 10/0525 (2010.01)

(52) Gemeinsame Patentklassifikation (CPC):
**H01M 4/386; H01G 11/24; H01G 11/38;
H01G 11/42; H01G 11/50; H01M 4/0471;
H01M 4/1395; H01M 4/366; H01M 4/625;**
H01M 10/052; H01M 10/0525; H01M 10/054;
H01M 2004/021; Y02E 60/10

(86) Internationale Anmeldenummer:
**PCT/EP2018/067485**

(87) Internationale Veröffentlichungsnummer:
**WO 2019/002508 (03.01.2019 Gazette 2019/01)**

(54) **NEUARTIGES KOMPOSITMATERIAL**

NOVEL COMPOSITE MATERIAL

NOUVEAU MATÉRIAU COMPOSITE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:   **29.06.2017   DE 102017211086**

(43) Veröffentlichungstag der Anmeldung:
**06.05.2020   Patentblatt 2020/19**

(73) Patentinhaber: **PCC Thorion GmbH
47198 Duisburg (DE)**

(72) Erfinder:
• **ROETHINGER, Johannes
86405 Meitingen (DE)**
• **SCHREINER, Christian
86405 Meitingen (DE)**

• **KETTERER, Bernt
86405 Meitingen (DE)**

(74) Vertreter: **Hoffmann Eitle
Patent- und Rechtsanwälte PartmbB
Arabellastraße 30
81925 München (DE)**

(56) Entgegenhaltungen:
**US-A1- 2012 244 428     US-A1- 2013 004 846
US-A1- 2015 340 687**

• **"A Basic Guide to Particle Characterization",
MALVERN INSTRUMENTS WORLDWIDE - WHITE
PAPER, 2 May 2012 (2012-05-02), pages 1 - 26,
XP055089322, Retrieved from the Internet
<URL:http://golik.co.il/Data/
ABasicGuidtoParticleCharacterization(2)
_1962085150.pdf> [retrieved on 20180614]**

**Beschreibung**

Die vorliegende Erfindung betrifft eine neuartiges Kompositmaterial, sowie das Verfahren zu dessen Herstellung als auch deren Verwendung in Lithium-Ionen-Batterien.

Lithium-Ionenbatterien sind wiederaufladbare Energiespeichersysteme (Sekundärbatterien), die unter den chemischen und elektrochemischen Energiespeichern die höchste Energiedichte von derzeit beispielsweise bis 250 Wh/kg aufweisen. Ihre Anwendung finden die Lithium-Ionenbatterien vor allem im Bereich der tragbaren Elektronikgeräte, wie beispielsweise für Laptops, Computer oder Mobiltelefone und im Bereich der Fortbewegungsmittel, wie beispielsweise für Fahrräder oder Automobile mit Elektroantrieben.

Für die Elektromobilität sind höhere Energiedichten der Lithium-Ionen-Batterien zur Steigerung der Reichweite von Fahrzeugen notwendig, für die tragbaren Elektronikgeräte zur Verlängerung der Nutzungsdauer mit einer Batterieladung.

Lithium-Ionen-Batterien umfassen eine Anode (negative Elektrode), eine Kathode (positive Elektrode) und einen Separator, welcher die Anode und Kathode voneinander trennt, und einen Elektrolyten, der Anode, Kathode, und Separator durchtränkt.

Als Anode wird im Folgenden die Zusammensetzung aus Aktivmaterial, welches auch als Anodenmaterial bezeichnet wird, Binder (wie beispielsweise Natrium-Carboxymethylcellulose (CMC), Styrol-Butadien-Kautschuk (SBR), Lithium-Polyacrylsäure oder Polyacrylsäure (PAA), Polyvinylidendifluorid (PVDF) und Varianten davon), Leitadditiven (wie beispielsweise Ruße, Carbon Black, Graphene, Singlewall-Carbon-Nanotubes (SW-CNTs), Multiwall-Carbon-Nanotubes (MW-CNTs), Carbon Nanohorns, Carbonfasern, Vapour-grown Carbonfibers, poröse Kohlenstoffe oder Mischungen daraus) und Stromableiter (beispielsweise Kupferfolie) bezeichnet.

Das Aktivmaterial ist das Material, welches an der elektrochemischen Reaktion teilnimmt.

US 2013/0004846 A1 beschreibt ein negatives Aktivmaterial umfassend einen Nanokern auf Siliziumbasis und eine erste amorphe kohlenstoffhaltige Beschichtungsschicht.

US 2012/244428 A1 beschreibt eine negative Elektrode für eine wiederaufladbare Lithiumbatterie, die eine negative aktive Materialschicht umfasst, die ein Polymerbindemittel mit einer sich wiederholenden Einheit und ein negatives aktives Material auf Si-Basis enthält.

US 2015/340687 A1 beschreibt ein Pulver für eine negative Elektrode für eine wiederaufladbare Lithium-Ionen-Batterie, dass eine Mischung aus Kohlenstoff und $SiO_x$ mit $0 < x < 1$ umfasst, wobei das $SiO_x$ aus einem nanometrischen Verbundstoff aus kristallinem $SiO_2$ und amorphem Si besteht.

Um den Anforderungen der höheren Energiedichte genügen zu können, wären Lithium-Legierungsanoden mit Metallen oder Halbmetallen wie beispielsweise Silicium, Germanium, Zinn, Blei wünschenswert, da diese eine deutlich höhere theoretische spezifische Kapazität, d.h. Speicherfähigkeit für Lithium, als Graphit aufweisen, der derzeit üblicherweise als Anodenmaterial in Lithium-Ionen-Batterien verwendet wird. Allerdings weisen Lithium-Ionen-Batterien mit Lithium-Legierungsanoden einen geringen Kapazitätserhalt nach vielen Lade-/Entladezyklen auf, d.h. eine geringere Zyklenstabilität. Der Kapazitätsverlust ist bedingt durch die große Volumenänderung von bis zu ca. 300% bei der Legierungsbildung zwischen Lithium und dem Legierungsmetall. Durch die ständige Volumenänderung bei jedem Lithiierungs- bzw. Delithiierungsschritt kommt es zu einer starken Beanspruchung des Aktivmaterials. Dies kann dazu führen, dass der elektrische Kontakt zwischen den einzelnen Partikeln und/oder zwischen den Partikeln und dem Stromableiter verloren geht, wodurch die Partikel aufgrund des verlorenen elektrischen Kontakts nicht mehr an den Lade- bzw. Entladeprozessen in der Batterie teilnehmen können und somit inaktiv werden. Dies führt zu Kapazitätsverlust. Ein weiteres Problem ist die durch die Volumenänderung einhergehende Oberflächenänderung der Partikel und die dadurch erfolgende Neubildung einer passivierenden (elektrisch isolierenden aber für Lithium Ionen durchlässigen) Deckschicht (der sogenannten solid electrolyte interphase, SEI) auf der Oberfläche der Partikel durch die Reaktion mit dem Elektrolyten. Da die SEI nicht ausreichend flexibel ist, kann sie nach den gängigen Erklärungsmodellen die Oberflächenänderungen nicht kompensieren. Daher kommt es bei jedem Lade-Entlade-Zyklus zu einer teilweisen Neubildung der SEI, was zu einem irreversiblen Verlust an Elektrolyt und Lithium führt. Der Verlust des direkt oder indirekt aus der Kathode stammenden Lithiums führt zu einem irreversiblen Kapazitätsverlust der Zelle. Der Verlust an Elektrolyt sowie die Ansammlung von SEI-Rückständen um die Partikel herum und in den Poren der Elektrode führen beide zu einer Zunahme des Zellwiderstands, beispielsweise durch allmähliche "Austrocknung" der Zelle oder Verstopfung der Porosität, was die Leistungsfähigkeit und indirekt die Zyklenstabilität der Zelle zusätzlich reduziert. Zur Vermeidung der starken Volumenausdehnung und der Reaktion mit dem Elektrolyten werden verschiedene Ansätze verfolgt:

- Beaufschlagung der Anode mittels externen Drucks (US 20100035128 A, US 20140266066 A1)
- Verwendung von Nano-Silicium als Anodenmaterial (in reiner Form oder als physikalische Mischung mit Graphit) (WO 2008139157 A1, WO 2001096847 A1, DE 102013211388 A1, EP 1730800 A2)
- Si-Legierungen als Anodenmaterial (US 7871727 B2, US 7906238 B2)

- Sliciumoxidpartikel (SiOx) als Anodenmaterial (US 9281129 B2, JP2011142021; beispielsweise beschreibt die WO 2014/095823 A1 ein Pulver umfassend eine Mischung enthaltend Kohlenstoff und $SiO_x$, mit 0<x<1, wobei das $SiO_x$ aus einem nanometrischen Komposit aus kristallinem $SiO_2$ und amorphem Si besteht.)
- C-Si Komposite
- Verwendung von Elektrolytadditiven (EP 2430686 B1)
- Poröse Elektroden als Anodenmaterial (US 6143216 A)
- Kohlenstoffbeschichtetes nano-Silicium als Anodenmaterial von nano-Si (US 20140234721 A1, JP2012084521)

Die Verwendung von reinem Nano-Silicium weist einige Nachteile auf. Die hohe Oberfläche von Nano-Silicium bedingt eine stärkere SEI-Bildung und somit auch höhere irreversible Verluste. Zudem bildet sich auf Silicium nur eine instabile SEI, was zu einer kontinuierlichen Neubildung und anwachsen der SEI führt, wodurch ein elektrischer Widerstand aufgebaut wird. Desweiteren ist die schlechte Verarbeitbarkeit (z.B. Sicherheit, Herstellung von homogenen Elektrodenpasten, höherer Binderbedarf durch höhere Oberfläche) von Nano-Silicium-pulvern zu nennen. Darüber hinaus besteht eine erhöhte Wahrscheinlichkeit für Kontaktverluste zum Stromableiter, wodurch ein höherer Bedarf an Leitadditiven vorliegt, was wiederum zu höheren irreversiblen Verlusten führt.

Eine weitere Möglichkeit ist, Silicium-Partikel mit einer Kohlenstoffmatrix zu kombinieren und idealerweise das Silicium im Kohlenstoff einzubetten. Das so erhaltene C-Si Kompositmaterial, welches als Aktivmaterial eingesetzt werden kann, schwächt die Volumenänderung des Siliciums ab und ein direkter Kontakt des Siliciums mit dem Elektrolyten wird weitgehend vermieden. Im Folgenden werden C-Si Kompositmaterial und Kompositmaterial synonym verwendet.

Ein weiterer wichtiger Vorteil der C-Si-Kompositmaterialien im Vergleich zu physikalischen Mischungen aus Graphit und Nano-Silicium, ist die Möglichkeit, trotz Verwendung von Nano-Silicium für die Kompositmaterialien eine mittlere Partikelgröße im Mikrometerbereich zu erzielen. Damit sind die Kompositpartikel in der Größe vergleichbar zu den derzeit genutzten Graphitpartikeln, wodurch die Handhabung und Verarbeitung des Kompositmaterials leichter auf den bereits auf Graphitanoden ausgelegten Produktionsanlagen möglich ist, als dies für ein reines Nanomaterial möglich wäre. Zudem wird im C-Si-Kompositmaterial die Volumenausdehnung des Nano-Siliciums gedämpft. Ein weiterer Vorteil gegenüber physikalischen Mischungen ist, dass sich eine stabilere SEI bildet.

Es hat sich aber als Schwierigkeit die partielle Entmischung von Silicium und der Kohlenstoffmatrix während der thermischen Behandlung gezeigt. Selbst wenn im vorangegangenen Mischprozess eine homogene/gleichmäßige Mischung aus Silicium, den weiteren Additivpartikeln und dem verwendeten Kohlenstoff-Precursor hergestellt wurde (sog. Grünmischung), führt die beobachtete Entmischung bei der thermischen Behandlung der Grünmischung zum Produkt zur einer partiellen Anreicherung und Agglomeratbildung von Silicium sowie entsprechend einer Verarmung des Siliciums in anderen Bereichen des Materials nach der thermischen Behandlung. Somit tritt letztendlich eine Inhomogenität der Verteilung von Silicium in Kohlenstoff auf, das heißt es gibt lokal/mikroskopisch Bereiche, die weniger oder kein Silicium aufweisen, und lokal/mikroskopisch Bereiche, die deutlich mehr Silicium aufweisen als im Mittel z.B. gemäß der mittleren makroskopischen Zusammensetzung zu erwarten wäre. Wenn diese Inhomogenität in Größenordnungsbereichen auftritt, die größer oder gleich der angestrebten mittleren Partikelgröße des Endprodukts sind, tritt durch diese Inhomogenität der Verteilung des Siliciums nachteilige Effekte sowohl bei der Weiterverarbeitung des Materials wie auch der Endanwendung des Produkts auf.

Die Entmischung wird insbesondere bei der Verwendung von thermoplastischen Kohlenstoff-Precursoren beobachtet, beispielsweise bei Pechen, und hier wiederum insbesondere bei den für die Verwendung zur Herstellung von Aktivmaterialien für Batterien vorteilhaften Pechen mit besonders geringen Verunreinigungen (geringer Aschegehalt (< 1 %) und geringe Chinolin-unlösliche Anteile (< 10%)). Bei Verwendung dieser Peche ist während der thermischen Behandlung zur Umwandlung in Kohlenstoff (Carbonisierung) ein ausgeprägtes (Meso-)phasenwachstum und damit die Ausbildung anisotroper Bereiche zu beobachten, welche zur Entmischung während des Carbonisierungsprozesses führt.

Zur Verwendung des C-Si-Kompositmaterials als Aktivmaterial wird dieses auf eine angestrebte Partikelgröße gemahlen. Bei der Mahlung des Materials werden auch aus den Silicium-freien beziehungsweise Silicium-verarmten Bereichen Partikel erzeugt, die kein oder wenig Silicium enthalten. Diese Partikel haben somit aufgrund des Fehlens des Siliciums eine deutlich geringere spezifische Kapazität als im Mittel angestrebt und tragen somit nur unterdurchschnittlich zur Gesamt-Kapazität der Anode bei. Gleichwohl findet auch an diesen Partikeln die SEI-Bildung statt, wodurch auch diese Partikel zu den irreversiblen Formierungsverlusten beitragen. Somit sind derartige Silicium-freie beziehungsweise -verarmte Partikel im Aktivmaterial der Anode für Lithium-Ionen-Batterien unerwünscht.

In dem Ausmaß in dem das Silicium bei auftretenden Inhomogenitäten lokal in manchen Bereichen der Kohlenstoffmatrix verarmt oder völlig abwesend ist, findet es sich in anderen Bereichen des Kompositmaterials angereichert. Dies wiederum führt dazu, dass bei der Mahlung des Materials aus diesen Bereichen Partikel entstehen, die eine deutlich höheren Siliciumgehalt bzw. einen deutlich geringeren Kohlenstoffgehalt aufweisen als angestrebt. Dadurch ist in diesen Partikeln das Silicium schlechter in der Kohlenstoffmatrix eingebettet. Dies führt in der Anode dazu, dass die Partikel eine sehr hohe spezifische Kapazität aufweisen, wodurch beim Laden und Entladen der Partikel z.B. eine sehr starke Volumenänderung durch den hohen Silicium-Gehalt auftritt, die z.B. zum Zerbrechen des C-Si-Partikels und/oder zur Störung der Elektrodenstruktur führen kann. Außerdem führt die starke Anreicherung des Siliciums bzw. des lithiierten Siliciums in einigen Partikeln der Anode zu einer entsprechenden lokal ungleichmäßigen Stromdichteverteilung zu bzw. von der Anode, was beispielsweise die Bildung von Lithium-Dendriten begünstigen kann, wodurch die Batterie unsicherer wird und im Extremfall sogar bei der Bildung eines internen Kurzschlusses beschädigt und zerstört werden kann.

Ein weiteres Problem durch die Anreicherung des Siliciums in manchen Bereichen nach der thermischen Behandlung der Mischung betrifft den Mahlprozess zum Pulver selbst: So wird aus den Silicium-reichen Bereichen des Kompositmaterials beim Mahlen verstärkt Silicium freigesetzt, da das Silicium in den Silicium-reichen Bereichen schlechter in dem Kohlenstoff / der Kohlenstoffmatrix eingebettet ist und diese Bereiche daher sozusagen als mechanische Schwachstellen bzw. Sollbruchstellen fungieren. Somit kann das Silicium bei der mechanischen Beanspruchung des Kompositmaterials während des Mahlprozesses besonders leicht aus den Silicium-reichen Bereichen herausgebrochen und freigesetzt werden. Bei Mühlen mit einem Partikelrückhaltesystem (z.B. Sichter), das kleinste Partikel (z.B. < 1 μm) passieren lässt, führt dies zu einem signifikanten Verlust an Silicium im Endprodukt, da beispielsweise das verwendete Nano-Silicium nach dessen Freisetzung diese Rückhaltesysteme passieren kann. Aufgrund der hohen Kosten für das Nano-Silicium ist dieser Verlust unvorteilhaft. Bei Mühlen, die das gesamte Material hingegen zurückhalten (z.B. geschlossene Kugelmühlen oder Mühlen mit Feinstpartikel-Filtern), führt die Freisetzung des Nano-Siliciums zu einer Anreicherung des Produkts mit ungebundenem Nano-Silicium. Selbst wenn dadurch kein Silicium verloren geht, ist auch dies unvorteilhaft, da sich durch den höheren Anteil an Nanopartikeln z.B. die Handhabung des Produktpulvers verschlechtert (z.B. Sicherheit) und die Verarbeitung des Materials zur Anode erschwert (z.B. höhere spezifische Oberfläche führt zu höherem Binderbedarf, höherer Aufwand zur Dispersion der Partikel, stärkere Neigung zur Agglomeration, ggf. schlechtere Elektrodenhaftung und schlechtere Verdichtbarkeit der Elektrode). Schließlich führt das freigesetzte Nano-Silicium auch zu einer Verschlechterung der elektrochemischen Eigenschaften der Anode durch die höhere exponierte Oberfläche an Silicium in der Elektrode, denn dies führt z.B. zu einer ungleichmäßigen Belastung bei der Lithiumeinlagerung, was wiederum zu einem Kapazitätsverlust oder zu einer verstärkten SEI-Bildung führt und damit die Lebensdauer der Lithium-Ionen-Batterie reduziert.

Aufgabe der Erfindung ist die Bereitstellung eines leicht zugänglichen neuartigen Kompositmaterials für Anoden von Lithium-Ionen-Batterien, das eine deutlich höhere spezifische Kapazität als Graphit aufweist, auf den bereits auf Graphitanoden ausgelegten Produktionsanlagen wie herkömmliche Graphitmaterialien verarbeitet werden kann, und eine hohe Betriebssicherheit der Batterie ermöglicht.

Die Aufgabe wird durch ein Kompositmaterial umfassend Silicium und Kohlenstoff, wobei der Anteil an Silicium 1 - 80 Gew. %, bevorzugt 2 - 60 Gew. %, besonders bevorzugt 5 - 50 Gew. %, beträgt und mindestens 90 Gew. % des Kompositmaterials in einem Dichtebereich zwischen dem unteren Dichtegrenzwert $\rho^*_1$, und dem oberen Dichtegrenzwert $\rho^*_2$ liegen, wobei für die Dichtegrenzwerte $\rho^*_{1,2}$

$$\rho^*_{1,2} = (1 \pm \delta) \cdot \rho$$

gilt und ρ die mittlere Dichte des Kompositmaterials beschreibt und $\pm \delta$ den Variationsbereich zwischen oberem Dichtegrenzwert $\rho^*_2$ und unterem Dichtegrenzwert $\rho^*_1$ bestimmt, wobei für den Betrag von $\delta < 0{,}10$ gilt, gelöst.

In einem erfindungsgemäß besonders bevorzugten Kompositmaterial beträgt der Anteil an Silicium 10 - 75 Gew. %, insbesondere 15 - 70 Gew. %, ganz besonders bevorzugt 20 - 65 Gew. %, z.B. 20 bis 60 Gew. %.

Das erfindungsgemäße Kompositmaterial für Lithium-Ionen-Batterien weist eine im Wesentlichen homogene Verteilung der Bestandteile auf, wodurch ungleichmäßige Belastungen bei der Lithiumeinlagerung, ungleichmäßige Volumeneffekte und unnötige Materialverluste beim Mahlen vermieden werden.

Wenngleich ein Höchstmaß an Homogenität des Kompositmaterials erstrebenswert wäre, so erwies sich, dass die nach dem erfindungsgemäßen Verfahren erhaltenen Kompositmaterialien eine vollständige Homogenität im Allgemeinen nur annähernd erreichen. Häufig liegen mindestens 3 Gew. %, 5 Gew. % oder sogar 10 Gew. % des Kompositmaterials in Dichtebereich(en) außerhalb eines sich von einem unteren Dichtegrenzwert $\rho^*_3$ bis zu einem oberen Dichtegrenzwert $\rho^*_4$ erstreckenden Bereich, wobei für die Dichtegrenzwerte $\rho^*_{3,4}$

$$\rho^*_{3,4} = (1 \pm \delta_{min}) \cdot \rho$$

gilt und ρ die mittlere Dichte des Kompositmaterials beschreibt und $\pm \delta_{min}$ den Variationsbereich zwischen oberem Dichtegrenzwert $\rho^*_4$ und unterem Dichtegrenzwert $\rho^*_3$ bestimmt, wobei für den Betrag von $\delta_{min} \geq 0{,}005$, z.B. 0,01, gilt.

Die mittlere Dichte ρ des Kompositmaterials ist nach folgender Gleichung gegeben:

$$\rho = \left( \frac{\prod_{i=1}^{n} \rho_i}{\sum_{i=1}^{n} \left( x_i \cdot \prod_{\substack{j=1 \\ j \neq i}}^{n} \rho_j \right)} \right)$$

wobei gilt:

$0 \leq x_i \leq 1$ und $1 = \sum_{i=1}^{n} x_i$ und n > 1 und j ≠ i.

Beispielsweise gilt für ein Kompositmaterial mit 4 Komponenten (n = 4):

$$\rho = \left( \frac{\rho_1 \rho_2 \rho_3 \rho_4}{x_1 \rho_2 \rho_3 \rho_4 + x_2 \rho_1 \rho_3 \rho_4 + x_3 \rho_1 \rho_2 \rho_4 + x_4 \rho_1 \rho_2 \rho_3} \right)$$

Die vier Komponenten können zum Beispiel, wie in Ausführungsbeispiel 3c gezeigt, Silicium, Graphit, Carbon Black und amorpher Kohlenstoff aus dem Kohlenstoff-Precursor sein.

Für die Dichtegrenzwerte ($\rho^*_{1,2}$) mit dem Variationsbereich $\pm \delta$ gilt somit:

$$\rho^*_{1,2} = (1 \pm \delta) \cdot \rho = (1 \pm \delta) \left( \frac{\prod_{i=1}^{n} \rho_i}{\sum_{i=1}^{n} \left( x_i \cdot \prod_{\substack{j=1 \\ j \neq i}}^{n} \rho_j \right)} \right)$$

wobei gilt:

$0 \leq x_i \leq 1$ und $1 = \sum_{i=1}^{n} x_i$ und n > 1 und j ≠ i.

Beispielsweise gilt für ein Kompositmaterial mit 4 Komponenten (n = 4 und δ = 0,2):

$$\rho^*_1 = (1 - 0{,}2) \cdot \rho = 0{,}8 \cdot \left( \frac{\rho_1 \rho_2 \rho_3 \rho_4}{x_1 \rho_2 \rho_3 \rho_4 + x_2 \rho_1 \rho_3 \rho_4 + x_3 \rho_1 \rho_2 \rho_4 + x_4 \rho_1 \rho_2 \rho_3} \right)$$

$$\rho^*_2 = (1 + 0{,}2) \cdot \rho = 1{,}2 \cdot \left( \frac{\rho_1 \rho_2 \rho_3 \rho_4}{x_1 \rho_2 \rho_3 \rho_4 + x_2 \rho_1 \rho_3 \rho_4 + x_3 \rho_1 \rho_2 \rho_4 + x_4 \rho_1 \rho_2 \rho_3} \right)$$

$x_i$ bezeichnet die Massenanteile der einzelnen Komponenten i, aus denen das Kompositmaterial besteht, nachdem es allen dafür nötigen thermischen Behandlungen unterzogen wurde. Die Massenanteile ergeben sich aus der Rezeptur des Kompositmaterials unter Berücksichtigung der jeweiligen Masse-Ausbeuten der Einzelkomponenten, die bei den Bedingungen der thermischen Behandlung des Kompositmaterials erzielt werden (z.B. über die Kohlenstoffausbeuten der eingesetzten Kohlenstoff-Precursoren, oder allgemeiner die Massenausbeuten der Gemische aus allen für das Kompositmaterial eingesetzten Kohlenstoff-Precursoren sowie allen damit mischbaren Additiven in dem Mengenverhältnis wie im betreffenden Kompositmaterial).

$\rho_i$ bezeichnet die Dichten der einzelnen Komponenten i, aus denen das Kompositmaterial besteht, wenn diese unter den gleichen Bedingungen thermisch behandelt wurden wie das betreffende Kompositmaterial. So ist z.B. p(Silicium) die Dichte des eingesetzten Siliciums (inkl. aller möglichen Verunreinigungen), p(Additiv a, b, c, etc.) die Dichten der für das Kompositmaterial eingesetzten unlöslichen Additive a, b, c, etc. (z.B. Graphit, Carbon Black, Titandioxid, etc.) und p(amorpher Kohlenstoff) die Dichte des amorphen Kohlenstoffs, der nach thermischer Behandlung aus dem Gemisch aus allen für das Kompositmaterial eingesetzten mischbaren Kohlenstoff-Precursoren sowie allen damit mischbaren Additiven erhalten wird, wenn die Rohstoffe dazu in dem gleichen Mengenverhältnis wie im betreffenden Kompositmaterial eingesetzt werden. Die Dichten $\rho_i$ werden pyknometrisch mit Xylol als Flüssigkeit (DIN 51901-2006) bestimmt, wobei zu deren Bestimmung möglichst fein gemahlene Pulver der einzelnen Komponenten mit einer mittleren Partikelgröße d50 im Bereich der mittleren Partikelgröße d50 des Kompositmaterials eingesetzt werden, um den Einfluss von für die Flüssigkeit unzugänglichen Poren möglichst klein zu halten.

Der Parameter δ bezeichnet den erfindungsgemäßen Variationsbereich der Dichte der durch den unteren Dichtegrenzwert $\rho^*_1$ bei Verwendung von -δ und den oberen Dichtegrenzwert $\rho^*_2$ bei Verwendung von +δ aufgespannt wird. Der Betrag des Parameters δ hat einen Wert von < 0,10, insbesondere < 0,09, bevorzugt < 0,08, besonders bevorzugt < 0,07, ganz besonders bevorzugt < 0,06, z.B. < 0,05.

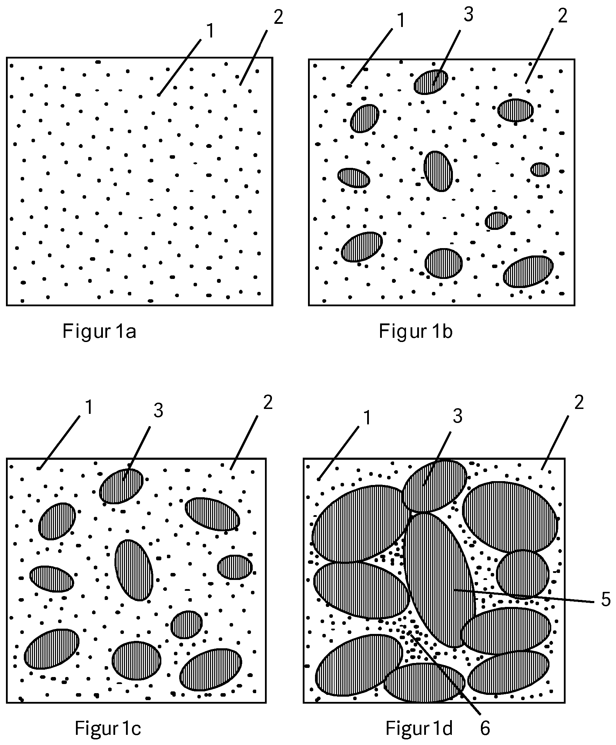

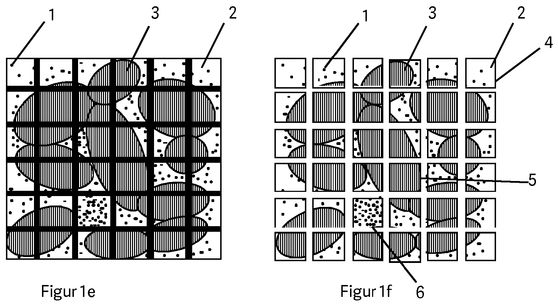

Wenn der Wert δ ≥ 0,12 ist, dann sind, wie in Figur 1 dargestellt, im Material nennenswerte Bereiche mit inhomogener Verteilung der Komponenten entstanden, die zu dadurch zu Partikelfraktionen mit unterschiedlichen Dichten führen, die deutlich von der mittleren Dichte abweichen. Eine inhomogene Verteilung der Komponenten im Material führt wiederum zu Nachteilen bei der Herstellung und Verarbeitung des Kompositmaterials, z.B. durch unerwünschte Materialanteile mit sehr hohen oder sehr niedrigen Siliciumanteilen sowie auch siliciumfreien Partikeln. Das Produkt hat durch die eine niedrigere nutzbare Kapazität als angestrebt. Die ungleichmäßige Verteilung z.B. des Siliciums in der Elektrode führt darüber hinaus zu weiteren Nachteilen in der Lithium-Ionen-Batterie, wie z.B. lokal ungleichmäßigen Stromdichten, die z.B. zu verstärkter Alterung führen können.

Unter Silicium wird im Rahmen der Erfindung poröses, nicht poröses, amorphes, teilkristallines, kristallines Silicium in beliebiger Form und Gestalt und in beliebigen Mischungen daraus verstanden, wobei metallische Verunreinigungen oder Bestandteile in Summe bis zu 10 Gew. % betragen können und nichtmetallische Verunreinigungen oder Bestandteile (z.B. umfassend die Elemente Wasserstoff, Bor, Kohlenstoff, Stickstoff, Sauerstoff, Phosphor, Fluor und/oder Schwefel) im Summe bis zu 50% betragen können.

Vorzugsweise ist das Silicium teilkristallin oder kristallin. Es ist also wenigstens teilweise kristallin. Ob das Silicium wenigstens teilweise kristallin ist, lässt sich leicht z.B. durch röntgendiffraktometrische Untersuchung (XRD) des Siliciums oder des das Silicium enthaltenden Kompositmaterials erkennen, und zwar anhand des Vorhandenseins von mindestens einem für beliebiges kristallines Silicium typischen Röntgenbeugungssignals. Für die röntgendiffraktometrische Untersuchungen kann ein Pulver-Diffraktometer genutzt werden, z.B. das Gerät EMPYREAN der Firma PANalytical mit zugehöriger Software High Score Plus. Als Röntgenquelle dient dabei eine Cu Kα Kathode (λ = 1,54056 Å), die Messung der Pulverprobe kann bei Raumtemperatur im Bereich von 2θ = 5 - 90° durchgeführt werden.

Alternativ kann auch mittels Transmissionenelektronenmikroskopie (TEM) das Silicium oder das das Silicium enthaltende Kompositmaterial untersucht werden, ob kristalline Bereich im Silicium erkennbar sind, die mindestens 1 Gew.% der Gesamtmenge des Siliciums ausmachen. Dazu kann z.B. ein JEOL JEM-2100F Transmissionselektronenmikroskop bei einer Spannung von 200 kV genutzt werden. Das Silicium kann - wenn es ausreichend klein ist - direkt analysiert werden, das Kompositmaterial oder größere Partikelproben muss z.B. durch Mikrotomschnitte präpariert werden, um die TEM-Untersuchungen durchführen zu können.

Bei mehr als 80 Gew. % Silicium im Kompositmaterial ist der Anteil an Kohlenstoff zu gering, um das Silicium in ausreichendem Maße im Sinne der Erfindung zu umhüllen bzw. zu umschließen. Durch die Erfindung wird ein Material mit einer homogeneren Verteilung des Siliciums im Kohlenstoffmaterial erzielt, was dadurch deutlich wird, dass mindestens 90 Gew. % des Kompositmaterials in dem Dichtebereich zwischen dem unteren Dichtegrenzwert $\rho^*_1$ und dem oberen Dichtegrenzwert $\rho^*_2$ liegen.

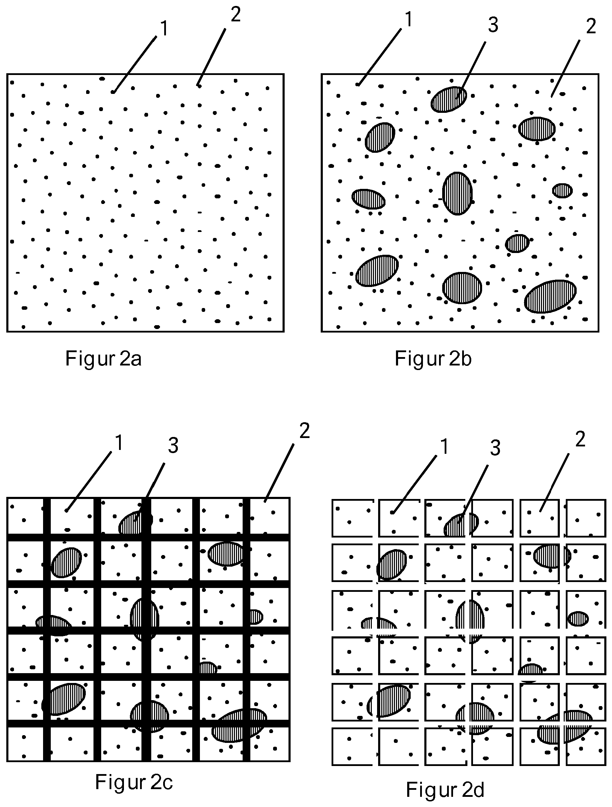

Im Rahmen der Erfindung wird ein Material unter einer homogenen Verteilung verstanden, dass keine Bereiche mit einer signifikant höheren oder niedrigeren Ansammlung an Silicium Partikeln vorliegen, sondern dass die Silicium Partikel gleichmäßig verteilt - im Idealfall statistisch verteilt - in dem aus dem Kohlenstoff-Precursor entstandenen Kohlenstoffmaterials vorliegen. Figur 2 d zeigt beispielsweise eine homogene Verteilung auf.

Die homogene Verteilung der Silicium-Partikel im Kompositmaterial verbessert die Weiterverarbeitung und Endanwendung, wobei zum Beispiel beim Mahlen weniger Materialverluste des Siliciums auftreten und das Kompositmaterial bei der Verwendung in Lithium-Ionenbatterien bei der Lithiumeinlagerung einer gleichmäßigeren Belastung ausgesetzt ist. So sind die volumetrischen Effekte des Siliciums gleichmäßiger im Kompositmaterial und damit in der Elektrode verteilt als wenn es starke lokale Anreicherungen von Silicium gäbe. Weiterhin ist durch eine gleichmäßigere Verteilung des Siliciums im Kompositmaterial und damit in der Elektrode die Stromdichte beim Laden und Entladen der Elektrode / Batterie gleichmäßiger verteilt, so dass die Gefahr lokaler Schädigungen des Elektrodenmaterials der Anode oder Kathode oder die Gefahr der Bildung von Lithium-Dendriten durch lokale Stromdichte-Maxima verringert wird.

Das Kompositmaterial liegt als Pulver vor, es handelt sich also um ein Kompositpulvermaterial.

Das Kompositpulvermaterial liegt in Form von Partikeln vor, insbesondere in Form von (sub)Mikropartikeln. Gemäß der üblichen Verwendung der Silben "mikro" und "submikro" bezeichnet "in Form von "(sub)Mikropartikeln" und "(sub)mikropartikuläres" im Zusammenhang mit der vorliegenden Erfindung ein Kompositmaterial mit einer mittleren Partikelgröße (d50) im Bereich von 100 nm bis 500 μm.

Vorteilhafterweise weist das Kompositmaterial eine Partikelgrößenverteilung mit einer mittleren Partikelgröße (d50) von 0,5 bis 60 μm, bevorzugt 1 - 40 μm, besonders bevorzugt 1 - 25 μm, äußerst bevorzugt 2 - 15 μm auf. Im Rahmen der Erfindung wird unter der Partikelgrößenverteilung die volumenbasierte Partikelgrößenverteilung verstanden. Unter der mittleren Partikelgröße d50 wird der Medianwert $X_{50,3}$ verstanden, wobei der Medianwert $X_{50,3}$ den Wert beschreibt bei der die Verteilungssummenkurve $Q_3(X)$ der Partikelgrößenverteilung 50 % beträgt. Der Medianwert $X_{50,3}$ wurde unter Zuhilfenahme der lasergranulometrischen Methode bestimmt (ISO 13320-2009), wobei ein Messgerät der Firma Sympatec GmbH mit zugehöriger Auswertesoftware verwendet wurde. Im Rahmen der Erfindung wird die volumenbasierte Partikelgrößenverteilung mit der massenbasierten Partikelgrößenverteilung als gleich angesehen, da die Dichte der Partikel als nicht größenabhängig angesehen wird.

Erfindungsgemäß liegt das Silicium im Kompositmaterial in Form von Partikeln vor, die wenigstens teilweise von dem Kohlenstoff umhüllt sind. Vorzugsweise beträgt das Verhältnis der mittleren Partikelgröße des Siliciums zur mittleren Partikelgröße des Kompositmaterials höchstens 0,1, im Allgemeinen liegt es im Bereich von 0,0005 bis 0,1, vorzugsweise im Bereich von 0,0008 bis 0,05. Die Einhaltung der Obergrenze von 0,1 erleichtert die Einstellung einer weitgehend homogenen Dichteverteilung des Kompositmaterials. Einzelne Siliciumpartikel, die gerade noch an einem oder an einem anderen Kompositpartikel haften, tragen nicht signifikant zur Masse und Dichte des jeweiligen Kompositpartikels bei, denn der jeweilige Kompositpartikel ist viel größer und schwerer, als der Siliciumpartikel.

Erfindungsgemäß erfüllt das Kompositmaterial die folgende Bedingung:

$$d50_{Si} \cdot \frac{p_c}{p_{Si}} > s$$

wobei

$d50_{Si}$     für die mittlere Größe der Siliciumpartikel in der Einheit "$\mu$m" steht

$p_C$     für den Anteil an Kohlenstoff am Kompositmaterial, ausgedrückt in Gew. %, steht,

$p_{Si}$     für den Anteil an Silicium am Kompositmaterial, ausgedrückt in Gew. %, steht, und

$s$     ein Sicherheitsparameter ist, der 0,02, insbesondere 0,03, vorzugsweise 0,04, besonders bevorzugt 0,05 beträgt.

Anteile an Silicium und an Kohlenstoff sind durch Elementaranalyse bestimmbar.

Die Größe der Siliciumpartikel im Kompositmaterial wird elektronenmikroskopisch bestimmt werden, indem man eine große Zahl an Kompositmaterialpartikelschnitten bildet, z.B. durch Fast Ion Bombardment (FIB), und die Größe der Si-Partikel in den Schnittflächen misst und mittelt, um eine zahlenmittlere Größe zu bilden.

Lägen also kleine Silicium-Nanopartikel mit $d50_{Si}$ von 0,01 $\mu$m (= 10 nm) vor, müsste der Anteil an Kohlenstoff mehr als 2mal so hoch sein, als der Anteil an Silicium, um die obige Ungleichung zu erfüllen. Bei einem $d50_{Si}$ von 0,03 $\mu$m (= 30 nm) ist die obige Ungleichung schon erfüllt, wenn etwas mehr Silicium als Kohlenstoff vorliegt.

Stimmt man die Anteile an Kohlenstoff und Silicium am Kompositmaterial gemäß der obigen Bedingung auf die mittlere Größe der Siliciumpartikel ab, ist eine hinreichende Silicium-Bedeckung mit Kohlenstoff bzw. Einbettung in Kohlenstoff auch in hinreichendem Maße gewährleistet. Denn die Ungleichung erzwingt dann eine entsprechende Steigerung des Anteils an Kohlenstoff, was auch bei Verwendung kleinerer Silicium-Nanopartikel mit besonders großer Oberfläche die exponierte Siliciumoberfläche des Kompositmaterials auf ein kleines Maß begrenzt. Es wird davon ausgegangen, dass ein Minimum exponierter Siliciumoberflächen zu einer einheitlicheren und geringeren SEI-Bildung führt, sowie eine gleichmäßigere Stromdichteverteilung zu bzw. von der Anode, wodurch die Batterie letztlich sicherer wird. Außerdem erschwert die Silicium-Bedeckung - bzw. die Silicium-Einbettung das Herausbrechen von Silicium-Partikeln aus dem Kompositmaterial. Der elektrische Kontakt zwischen den einzelnen Silicium-Partikeln und dem Stromableiter bleibt dann zuverlässiger bestehen. Die Partikel nehmen aufgrund des fortbestehenden elektrischen Kontakts an den Lade- bzw. Entladeprozessen in der Batterie besser teil und bleiben somit aktiv. Dies wie auch die Reduktion der SEI-Bildung verringert auch bei wiederholten Lade- und Entladezyklen auftretende Kapazitätsverluste.

Ein weiterer Aspekt der vorliegenden Erfindung ist ein Verfahren zur Herstellung eines Kompositmaterials.

Dieses Verfahren umfasst die folgenden Schritte

a) bereitstellen von Silicium, das vorzugsweise mindestens teilweise kristallin ist und z.B. in Form von Partikeln vorliegt,

b) bereitstellen mindestens eines Kohlenstoff-Precursors

c) herstellen einer Mischung umfassend die Komponenten aus Schritt a) und b) und

d) erzeugen des Kompositmaterials durch Weiterverarbeitung der Mischung aus Schritt c) umfassend eine thermische Behandlung und Zerkleinerung.

Die Begriffe thermische Behandlung und Carbonisierung werden im Rahmen der Erfindung synonym verwendet.

Vorteilhafterweise weist das das Silicium aus Schritt a) eine Partikelgrößenverteilung mit einer mittleren Partikelgröße (d50) von 10 nm bis 1 $\mu$m, bevorzugt 20 nm bis 0,5 $\mu$m, besonders bevorzugt 20 nm bis 0,3 $\mu$m, ganz besonders bevorzugt 30 nm bis 0,2 $\mu$m, äußerst bevorzugt 40 nm bis 180 nm auf. Bei einer mittleren Partikelgröße von kleiner als 10 nm ist das Silicium sehr reaktiv, so dass die Gefahr bestünde, dass es sich - wenn es nicht bereits durch Oxidation passiviert ist - an Luft selbstentzünden könnte, weshalb es nur sehr aufwändig gehandhabt werden kann. Sofern das Material hingegen bereits oberflächlich durch beispielsweise Oxidation passiviert ist, wäre aufgrund der sehr kleinen mittleren Partikelgröße das Oberflächen- zu Volumenverhältnis sehr ungünstig, d.h. das Material besteht dann üblicherweise zu einem zu hohen Anteil aus der Passivierungsschicht und es verbleibt zu wenig reines Silicium als Aktivmaterial. Bei einer mittleren Partikelgröße von größer als 1 μm wäre die absolute Volumenänderung der Partikel selbst bei nur partiellem Laden und Entladens so hoch, dass über wenige Zyklen (z.B. innerhalb der ersten 50 Zyklen) die Partikel ohnehin zu kleineren Fragmenten zerbrechen würden, was zu elektrischem / mechanischen Kontaktverlust zur Elektrode und zu weitere SEI-Bildung führen würde, wodurch sich die Lebensdauer / Zyklenstabilität einer Zelle mit einem derartigen Material stark verringern würden. Die Partikelgrößenverteilung mit einer mittleren Partikelgröße (d50) wird mittels dynamischer Lichtstreuung nach ISO 22412-2017 gemessen.

Vorteilhafterweise wird der Kohlenstoff-Precursor aus Schritt b) ausgewählt aus der Gruppe Pech, Teer, Biomaterialien, Polymere und harzbasierte Rohstoffe mit einer Kohlenstoffausbeute >5% oder Mischungen hieraus, bevorzugt Peche, Kohlenhydrate, Polyacrylnitrile, Polyvinylchloride, Polyimide, Phenolharze oder Mischungen hieraus, besonders bevorzugt Peche mit Erweichungstemperaturen < 400 °C und Aschegehalt < 1%.

Unter einem Kohlenstoff-Precursor werden alle Materialien verstanden, aus denen durch die thermische Behandlung in Schritt d) ein Kohlenstoffmaterial erhalten werden kann, wobei die Kohlenstoffausbeute mindestens 5% beträgt. Die Kohlenstoffausbeute der Kohlenstoff-Precursor wird nach der Alcan-Methode ermittelt (ISO6998-97).

Im Rahmen der Erfindung werden unter Biomaterialien Kohlehydrate und Lignine verstanden.

Ein bevorzugter Kohlenstoff-Precursor ist ein thermoplastischer Kohlenstoff-Precursor. Dabei handelt es sich um eine Masse, die schmelzbar und carbonisierbar ist. Schmelzbar und carbonisierbar bedeutet, dass die Masse bei Erhitzen bei mindestens einer Aufheizrate im Bereich von 0,001 K/min bis 1000 K/s als Schmelze vorliegen kann, bevor sie, bei einer weiteren Steigerung der Temperatur oder nach längerer Zeit bei einer konstanten Temperatur oberhalb von 100 °C, in ein festes Carbonisierungsprodukt übergeht. Die Schmelzbarkeit kann z.B. geprüft werden, indem man eine Probe der Masse kontrolliert erhitzt und in regelmäßig überprüft, ob eine Schmelze vorliegt, die beispielsweise daran erkennbar ist, dass die Probe weich wird. Bestimmte thermoplastischen Kohlenstoff-Precursoren sind z.B. Peche, Teere, Bitumen, Asphalte und Polymere und Co-Polymere wie z.B. Polyvinylchlorid, thermoplastische Polyacrylinitrile und bestimmte Harze und Biomaterialien.

Vorteilhafterweise liegt die nach Schritt c) erhaltene Mischung homogen verteilt vor. Dabei ist es insbesondere vorteilhaft, wenn bei Verwendung von Nano-Silicium dieses fein verteilt, d.h. nicht in agglomerierter Form in der Mischung vorliegt.

Die homogene Verteilung in Schritt c) ist für das Erhalten eines möglichst homogenen Produkts nach dem sich anschließenden Schritt d) eine förderliche Voraussetzung.

Vorteilhafterweise wird die thermische Behandlung in Schritt d) unter Sauerstoffausschluss mit bis zu einer Temperatur von 400 - 1600 °C, bevorzugt 400°C - 1450 °C, besonders bevorzugt von 600 °C - 1450 °C, äußerst bevorzugt 800 °C - 1350 °C ausgewählt und für eine Dauer von 1 s bis 240 h, bevorzugt 1 s bis 72 h, besonders bevorzugt 1 s bis 24 h, äußerst bevorzugt 1 s bis 12 h durchgeführt.

Unter Sauerstoffausschluss wird im Rahmen dieser Erfindung verstanden, dass durch Reaktionen mit Sauerstoff maximal 10% des zu erwartenden Produktes in Nebenreaktionen mit Sauerstoff abreagieren.

Unter einer thermischen Behandlung wird im Rahmen dieser Erfindung ein Verfahren verstanden, bei dem die Probe bis zu der gewählten Temperatur erwärmt wird. Unter der Dauer wird im Rahmen der Erfindung die Zeit bis zum Erreichen der Temperatur verstanden. Das Erzeugen des Kompositmaterials kann neben der thermischen Behandlung auch andere Verfahrensschritte umfassen, beispielsweise ein Durchmischen und/oder Begasen der Mischung.

Durch die thermische Behandlung wird der Kohlenstoff-Precursor durch Pyrolyse in ein Kohlenstoffmaterial umgewandelt.

Bei einer Temperatur von weniger als 400°C ist der Kohlenstoff-Precursor noch nicht vollständig zum Kohlenstoffmaterial umgewandelt, was je nach Precursor zu verschiedenen Problemen führen kann, wie beispielsweise toxische Rückstände, unzureichende Reinheit, Fremdelemente, unzureichende elektrische Leitfähigkeit, etc. Bei einer Temperatur von größer als 1600°C ist die Reaktion von Silicium mit dem Kohlenstoff so schnell, dass eine Bildung von Silciumcarbid nicht mehr ausgeschlossen werden kann.

Bei einer Dauer von weniger als 1 s werden in sehr kurzer Zeit so hohe Mengen an flüchtigen Zersetzungsprodukten aus dem Kohlenstoff-Precursor freigesetzt, dass im großtechnischen Maßstab die Entfernung / Handhabung der Zersetzungsprodukte Schwierigkeiten macht. Bei einer Dauer von mehr als 240 h kann die Entmischung nicht mehr ausreichend verhindert werden.

Vorteilhafterweise weisen die gemahlenen Partikel aus Schritt d) eine Partikelgrößenverteilung mit einem d50 von 0,5 bis 60 μm, bevorzugt, 1 - 40 μm, besonders bevorzugt 1 - 30 μm, äußerst bevorzugt 2 - 25 μm, z.B. 4 - 20 μm auf.

Bei einer Partikelgrößenverteilung mit einem d50 von kleiner als 0,5 μm sind die Kompositpartikel nur noch unwesentlich größer als Nano-Silicium, so dass nicht mehr von einem bevorzugten Kompositmaterial im Sinne der Erfindung gesprochen werden kann. Außerdem würde das Material durch eine derartig kleine mittlere Partikelgröße schlecht mit herkömmlichen Verfahren und Anlagen zu Elektroden verarbeitbar sein, und zudem das Material unerwünscht hohe spezifische Oberfläche aufweisen, die wiederum zu unvorteilhaft hohen irreversiblen Verlusten bei der Formierung der Anoden führen würden. Bei einer Partikelgrößenverteilung mit einem d50 von größer als 60 μm wären die Partikel so groß, dass Sie im Vergleich zu den üblichen Beschichtungsdicken (z.B. 40 - 120 μm) der Anoden so groß wären, dass die Homogenität der Elektrode (Dicke, Flächenbeladung, Porosität) bzw. die Kalandrierbarkeit der Elektrode negativ beeinflusst wird, wodurch die Stabilität der Elektrode und damit der Zelle reduziert wird. Gemessen wird die Partikelgrößenverteilung wie oben beschrieben, unter Zuhilfenahme der lasergranulometrischen Methode (ISO 13320-2009), wobei ein Messgerät der Firma Sympatec GmbH mit zugehöriger Auswertesoftware verwendet wurde.

In einer alternativen Ausführungsform des Verfahrens zur Herstellung eines Kompositmaterials wird zusätzlich zu den in Schritt a) und b) bereitgestellten Komponenten noch mindestens ein Additiv bereitgestellt. Die in c) hergestellte Mischung umfasst dann im Allgemeinen zusätzlich das Additiv. Ein Teil des Additivs oder die Gesamtmenge des Additivs, kann aber auch erst im Verlauf der thermischen Behandlung zugegeben werden.

Als Additiv wird diejenige Komponente bezeichnet, die rechnerisch nach der thermischen Behandlung im Verhältnis zum Kohlenstoff-Precursor den geringeren Anteil an Kohlenstoff zur Gesamtmenge an Kohlenstoff, die während der thermischen Behandlung erzeugt wurde, beiträgt.

Im Folgenden werden die verschiedenen Arten von Additiven beschrieben, nämlich partikelförmige Additive (unlösliche Additive) und mischbare Additive.

Durch die Verwendung von mindestens einem zusätzlichen Additiv wird eine bessere Unterdrückung der Entmischung während der Carbonisierung und/oder eine bessere Kohlenstoffausbeute aus dem Precursor erzielt. Die durch das Additiv erreichbare Reduzierung der Entmischung erlaubt einen einfacheren Produktionsprozess für die Carbonisierung und/oder eine Reduktion des Silicium-Verlusts bei der Mahlung des Materials in Schritt d) und/oder eine Verbesserung der Homogenität des Materials und damit verbunden bessere Materialeigenschaften wie z.B. eine verbesserte Verarbeitung des Materials zur Anode oder eine verbesserte Zyklenstabilität ermöglicht.

In einer Ausführungsform ist das mindestens eine Additiv eine in dem mindestens einem Kohlenstoff-Precursor unlösliche Komponente, bevorzugt ausgewählt aus der Gruppe der anorganischen Materialien, besonders bevorzugt Titanoxid, Siliciumdioxid, Aluminiumoxid, Zirkondioxid, Boroxid, Siliciumcarbid, Naturgraphite, synthetische Graphite, expandierte Graphite, Ruße, Carbon Black, amorphe Kohlenstoffe, Graphene, Singlewall-Carbon-Nanotubes (SW-CNTs), Multiwall-Carbon-Nanotubes (MW-CNTs), Carbon Nanohorns, Vapour-grown Carbonfibers, oder beliebige Mischungen daraus, äußerst bevorzugt Graphite, Naturgraphite, synthetische Graphite, expandierte Graphite, Ruße, Carbon Blacks, Graphene, amorphe Kohlenstoffe, Singlewall-Carbon-Nanotubes (SW-CNTs), Multiwall-Carbon-Nanotubes (MW-CNTs), Carbon Nanohorns, Vapour-grown Carbonfibers oder Mischungen daraus.

Im Rahmen der Erfindung werden unter anorganischen Materialien alle Metalle und Halbmetalle, sowie deren nichtgasförmige Verbindungen unter Standardbedingungen verstanden. Ebenso werden alle Kohlenstoffmaterialien und allotrope Formen des Elements Kohlenstoff, zu den anorganischen Materialien gezählt.

Im Rahmen der Erfindung werden unter amorphem Kohlenstoff alle nicht graphitischen Kohlenstoffmaterialien, wie Hard Carbon, Soft Carbon, aktivierter Kohlenstoff, poröse Kohlenstoffe, und Koks verstanden. Im Rahmen der Erfindung wird unter Soft Carbon graphitierbare nicht-graphitische Kohlenstoffmaterialien und unter Hard Carbon nichtgraphitierbare nicht-graphitische Kohlenstoffmaterialien verstanden.

Je kleiner die Partikelgröße des verwendeten Siliciums für das C-Si Kompositmaterial, desto mehr kann das Silicium die Funktion des Additives übernehmen.

Vorteilhafterweise weist das mindestens eine Additive einen mittlere Partikelgröße d50 oder eine kürzeste Achse von kleiner als 10 μm, bevorzugt kleiner als 8 μm, besonders bevorzugt kleiner als 6 μm, äußerst bevorzugt kleiner als 4 μm, überaus äußerst bevorzugt kleiner als 2 μm auf. Bei größer als 10 μm sind nicht genügend Additivpartikel pro Produktpartikel vorhanden. Aus diesem Grund tritt kein positiver Effekt des mindestens einen Additivs auf. Es ist ausreichend, wenn bei Verwendung von mehreren Additiven eines eine mittlere kürzeste Achse von kleiner als 10 μm, bevorzugt kleiner als 8 μm, besonders bevorzugt kleiner als 6 μm, äußerst bevorzugt kleiner als 4 μm, überaus äußerst bevorzugt kleiner als 2 μm aufweist.

Die kürzeste Achse wird mittels Elektronenmikroskop ausgemessen und die mittlere Partikelgröße d50 wird je nach der für das Additiv erwarteten Partikelgröße mittels lasergranulometrischer Methode (ISO 13320-2009) oder der dynamischer Lichtstreuung (ISO 22412-2017) gemessen.

Vorteilhafterweise wird das mindestens eine Additiv in einem Verhältnis verwendet, so dass der Anteil des mindestens einen Additivs 90 - 1 Gew. %, bevorzugt 70 - 1 Gew. %, besonders bevorzugt 50 - 1 Gew. %, äußerst bevorzugt 40 - 1 Gew. % des nicht das Silicium umfassenden Teils des Kompositmaterials beträgt.

In bestimmten Ausführungsformen wird wenig Additiv verwendet, so dass der Anteil an Additiv insgesamt weniger als 1 Gew. % des nicht das Silicium umfassenden Teils des Kompositmaterials beträgt. Oft lässt sich mit sehr geringen Anteilen an Additiv die bei der thermischen Behandlung auftretende Mesophasenbildung in hinreichendem Maße unterdrücken. Dies gilt insbesondere, wenn das Additiv in der Mischung sehr fein verteilt vorliegt, beispielsweise wenn das Additiv eine mittlere Partikelgröße d50 oder eine kürzeste Achse von kleiner als 10 μm hat.

Beträgt der Anteil des mindestens einen Additives mehr als 90 Gew. % des nicht das Silicium umfassenden Teils des Kompositmaterials, so ist der Anteil des verbleibenden Rests des nicht das Silicium umfassenden Teils des Kompositmaterials, also die Kohlenstoffmatrix, nur noch in einem sehr geringen Anteil im Kompositmaterial enthalten. Dadurch bedingt ist das Verhältnis aus Silicium und Kohlenstoffmatrix ungünstig und es liegt kein bevorzugtes Kompositmaterial mehr vor, in dem das Silicium in der Kohlenstoffmatrix verteilt vorliegt.

Vorteilhafterweise wird die thermische Behandlung nach Schritt d) bei Verwendung eines Additives, unter Sauerstoffausschluss mit bis zu einer Temperatur von 400 - 1600 °C, bevorzugt 400°C - 1450 °C, besonders bevorzugt von 600 °C - 1450 °C, äußerst bevorzugt 800 °C - 1350 °C und für eine Dauer von 1 s bis 720 h, bevorzugt 1 s bis 360 h, besonders bevorzugt 1 s bis 240 h, äußerst bevorzugt 1 s bis 72 h, überaus äußerst bevorzugt 1 s bis 24 h durchgeführt.

Bei einer Temperatur von weniger als 400°C ist der Kohlenstoff-Precursor noch nicht vollständig zum Kohlenstoff umgewandelt, was je nach Precursor zu verschiedenen Problemen führen kann, wie beispielsweise toxische Rückstände, unzureichende Reinheit, Fremdelemente, unzureichende elektrische Leitfähigkeit, etc. Bei einer Temperatur von größer als 1600°C ist die Reaktion von Silicium mit dem Kohlenstoff so schnell, dass eine Bildung von Silciumcarbid nicht mehr ausgeschlossen werden kann.

Bei einer Dauer von weniger als 1 s werden in sehr kurzer Zeit so hohe Mengen an flüchtigen Zersetzungsprodukten aus dem Kohlenstoff-Precursor freigesetzt, dass im großtechnischen Maßstab die Entfernung / Handhabung der Zersetzungsprodukte Schwierigkeiten macht. Bei einer Dauer von mehr als 720 h kann die Entmischung häufig nicht mehr ausreichend verhindert werden.

Vorteilhafterweise weisen die gemahlenen Partikel aus Schritt d) eine Partikelgrößenverteilung mit einer mittleren Partikelgröße d50 von 0,5 bis 60 μm, bevorzugt, 1 - 40 μm, besonders bevorzugt 1 - 30 μm, äußerst bevorzugt 2 - 25 μm, z.B. 4 - 20 μm auf.

Die Partikelgrößenverteilung wird, wie oben beschrieben, unter Zuhilfenahme der lasergranulometrischen Methode bestimmt (ISO 13320-2009), wobei ein Messgerät der Firma Sympatec GmbH mit zugehöriger Auswertesoftware verwendet wurde.

In einer alternativen Ausführungsform ist das mindestens eine Additiv eine mit dem Kohlenstoff-Precursor mischbare Komponente, ausgewählt aus der Gruppe der Harze, Polymere, Polymerisations-Initiatoren, Polymer-Vernetzungsmittel oder Mischungen davon, bevorzugt Phenolharze, Resorcinharze, Kresolharze, Alkylphenolharze, Cyanatesterharze, Epoxidharze, Furanharze, Polyesterharze, Alkydharze, ungesättigte Polyesterharze, Vinylesterharze, Acrylharze, Bismaleinimidharze, Silikonharze, Silikonkautschuke, Polyacrylnitrile, Polyimide, Polyisoprene, Polybutadiene, Polychloroprene, Ethylen-Propylen-Dien-Kautschuke, Polyvinylalkohole, Polyvinlychloride, Polystyrole, 2,3 Dimethyl-2,3-Diphenylbutan, Friedel-Crafts-Katalysatoren, Urotropin, Schwefel, Bismaleinimide, oder Mischungen daraus.

Unter Mischungen werden sowohl physikalische als auch "chemische" (z.B.: Copolymere) Mischungen verstanden. Im Rahmen der Erfindung wird unter mischbar sowohl löslich als auch emulgierbar verstanden.

Als Additive für diese alternative Ausführungsform können auch die oben genannten Kohlenstoff-Precursormaterialien eingesetzt werden. Das mit dem Kohlenstoff-Precursor mischbare Additiv kann während der thermischen Behandlung mit sich selbst oder dem Kohlenstoff-Precursor reagieren und pyrolytisch verändert werden. Damit das Additiv reaktiv ist, muss es polymerisierbar und /oder vernetzbar sein.

Vorteilhafterweise beträgt der Anteil des mindestens einen Additivs 90-1 Gew. %, bevorzugt 70-1 Gew. %, besonders bevorzugt 50-1 Gew. %, ganz besonders bevorzugt 40 - 1 Gew. % des nicht das Silicium umfassenden Anteils des Kompositmaterials.

Beträgt der Anteil des mindestens einen Additives mehr als 90 Gew. % des nicht das Silicium umfassenden Teils des Kompositmaterials, so ist der Anteil des verbleibenden Rests des nicht das Silicium umfassenden Teils des Kompositmaterials, also die Kohlenstoffmatrix, nur noch in einem sehr geringen Anteil im Kompositmaterial enthalten. Dadurch bedingt ist das Verhältnis aus Silicium und Kohlenstoffmatrix ungünstig und es liegt kein Kompositmaterial mehr im Sinne der Erfindung vor, in dem das Silicium in der Kohlenstoffmatrix homogen verteilt vorliegt. Bei weniger als 1 Gew. % ist der Effekt des mindestens einen Additivs nicht ausreichend, um eine entsprechend der Erfindung angestrebte Verbesserung der Homogenität des Materials zu erzielen.

Vorteilhafterweise wird die thermische Behandlung in Schritt d) bei Verwendung eines Additives unter Sauerstoffausschluss mit bis zu einer Temperatur von 400 - 1600 °C, bevorzugt 400°C - 1450 °C, besonders bevorzugt von 600 °C - 1450 °C, äußerst bevorzugt 800 °C - 1350 °C und für eine Dauer von 1 s bis 720 h, bevorzugt 1 s bis 360 h, besonders bevorzugt 1 s bis 240 h, äußerst bevorzugt 1 s bis 72 h, überaus äußerst bevorzugt 1 s bis 24 h durchgeführt.

Bei einer Temperatur von weniger als 400°C ist der Kohlenstoff-Precursor noch nicht vollständig zum Kohlenstoff umgewandelt, was je nach Precursor zu verschiedenen Problemen führen kann, wie beispielsweise toxische Rückstände, unzureichende Reinheit, Fremdelemente, unzureichende elektrische Leitfähigkeit, etc. Bei einer Temperatur von größer als 1600°C ist die Reaktion von Silicium mit dem Kohlenstoff so schnell, dass eine Bildung von Silciumcarbid nicht mehr ausgeschlossen werden kann.

Bei einer Dauer von weniger als 1 s werden in sehr kurzer Zeit so hohe Mengen an flüchtigen Zersetzungsprodukten aus dem Kohlenstoff-Precursor freigesetzt, dass im großtechnischen Maßstab die Entfernung / Handhabung der Zersetzungsprodukte Schwierigkeiten macht. Bei einer Dauer von mehr als 720 h kann die Entmischung häufig nicht mehr ausreichend verhindert werden.

Vorteilhafterweise weisen die gemahlenen Partikel aus Schritt d) eine Partikelgrößenverteilung mit einem d50 von 0,5 bis 60 $\mu$m, bevorzugt, 1 - 40 $\mu$m, besonders bevorzugt 1 - 30 $\mu$m, äußerst bevorzugt 2 - 25 $\mu$m, z.B. 4 - 20 $\mu$m auf.

Die Partikelgrößenverteilung wird, wie oben beschrieben, unter Zuhilfenahme der lasergranulometrischen Methode bestimmt (ISO 13320-2009), wobei ein Messgerät der Firma Sympatec GmbH mit zugehöriger Auswertesoftware verwendet wurde.

Das erfindungsgemäße Kompositmaterial kann als einzige Komponente oder als mindestens eine Komponente des Aktivmaterials für die Anode von Lithium-Ionen-Batterien, Lithium-Schwefel-Batterien und/oder Natrium-Ionen-Batterien verwendet werden. Weitere mögliche Komponenten des Aktivmaterials sind beispielsweise Naturgraphite, synthetische Graphite, expandierte Graphite, amorphe Kohlenstoffe (Hard Carbon, Soft Carbon) oder beliebige Mischungen daraus.

Nachfolgend wird die vorliegende Erfindung rein beispielhaft anhand vorteilhafter Ausführungsformen und unter Bezugnahme auf die beigefügten Zeichnungen beschrieben. Die Erfindung wird durch die Figuren nicht beschränkt.

Die Figuren zeigen schematische Darstellungen, die bei Betrachtung im Polarisationslichtmikroskop erhalten werden können.

Figuren 1a - 1f zeigen schematisch die unterschiedlichen Stufen der Bildung des C-Si-Kompositmaterials (Grundproblem).

Figuren 2a - 2d zeigen schematisch die unterschiedlichen Stufen der Bildung des C-Si-Kompositmaterials mit erfindungsgemäßer thermischer Behandlung ohne Additive oder mit mischbare Additiven mit erfindungsgemäßer thermischer Behandlung.

Figuren 3a - 3e zeigen schematisch die unterschiedlichen Stufen der Bildung des C-Si-Kompositmaterials mit unlöslichen Additiven mit erfindungsgemäßer thermischer Behandlung.

Figur 1a - 1f zeigt schematisch die Umsetzung einer homogenen Grünmischung aus Nano-Silicium (1) mit einem mesogenen Kohlenstoff-Precursor (2).

Figur 1a zeigt eine homogene Grünmischung vor Beginn der thermischen Behandlung.

Figur 1b zeigt eine beginnende Bildung von Mesophasen (3) während der thermischen Behandlung.

Figur 1c zeigt die während der thermischen Behandlung wachsenden Silicium-freien Mesophasen (3), wodurch es zu einer Aufkonzentration des Nano-Siliciums in der noch isotropen Phase kommt.

Figur 1d zeigt Silicium-freien anisotropen Bereiche, die durch teilweise Koaleszenz der Mesophasen aus diesen hervorgehen, und mit dem Silicium angereicherte isotrope Bereiche. Bis zum Abschluss der thermischen Behandlung erstarrt die Struktur zum fertig carbonisierten C-Si-Kompositmaterial mit Si-freien Kohlenstoffmaterial-Bereichen (5), die aus der Mesophase hervorgegangen sind, und Si-angereicherten Bereichen (6) im C-Si-Kompositmaterial, die aus den mit dem Silicium angereicherten isotropen Bereichen hervorgegangen sind.

Figur 1e zeigt die schematische Zerteilung des thermisch behandelten Materials durch eingezeichnete Bruchlinien auf eine Partikelgröße entsprechend des eingezeichneten Gitterabstands der Linien.

Figur 1f zeigt schematisch das nach der Mahlung erhaltene Pulver mit Silicium-freien Partikeln aus reinem Kohlenstoffmaterial (5), Silicium-angereicherten Partikeln (6) und Partikeln mit jeweiligen Anteilen (4) zwischen den Extrem-Möglichkeiten Silicium-freie Partikel nur aus Kohlenstoffmaterial und Partikel nahezu ausschließlich aus Silicium ohne erkennbares Kohlenstoffmaterial. Die Bandbreite an möglichen Zusammensetzungen der einzelnen Partikel führt dazu, dass sich die Partikel in ihrer jeweiligen Dichte unterscheiden können, je nachdem welchen Anteil an Kohlenstoff oder Silicium diese enthalten.

Figuren 2a - 2d zeigen schematisch die Umsetzung einer homogenen Grünmischung aus Nano-Silicium (1) mit einem mesogenen Kohlenstoff-Precursor (2).

Figur 2a zeigt eine homogene Grünmischung vor Beginn der thermischen Behandlung.

Figur 2b zeigt die Bildung von Mesophasen (3) während der erfindungsgemäßen thermischen Behandlung. Die einzelnen Mesophasen bleiben kleiner als in Figur 1b-f, wobei sich deren Anzahl durch verstärkte Nukleation während der thermischen Behandlung erhöhen kann.

Figur 2c zeigt die schematische Zerteilung des Kompositmaterials nach der thermischen Behandlung durch eingezeichnete Bruchlinien auf eine Partikelgröße entsprechend des eingezeichneten Gitterabstands der Linien.

Figur 2d zeigt schematisch das nach der Mahlung erhaltene Pulver.

Im Vergleich zu Figur 1f führt die geringere Bandbreite an möglichen Zusammensetzungen der einzelnen Partikel dazu, dass sich die Partikel in ihrer jeweiligen Dichte weniger unterscheiden.

Die Figuren 2a-2d stellen ebenso den Prozess mit einem mischbaren Additiv dar, dieses ist mit dem Kohlenstoff-Precursor (2) homogen gemischt.

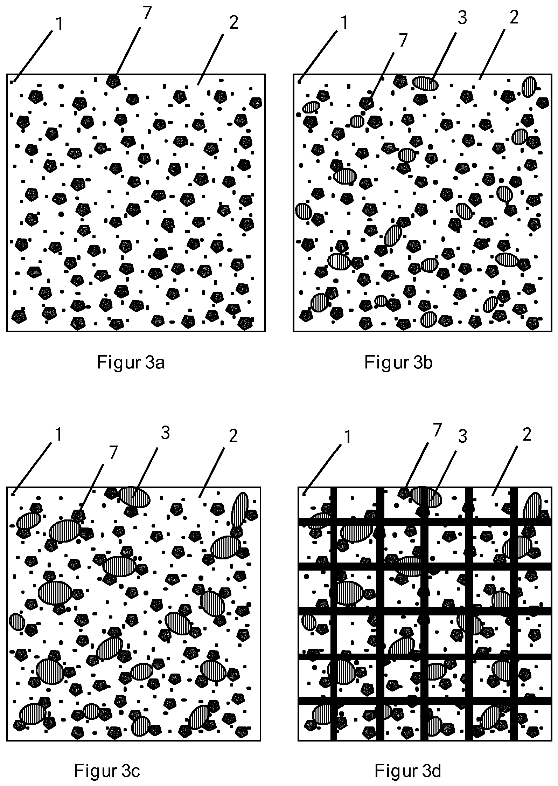

Figuren 3a bis 3e zeigen schematisch die Umsetzung einer homogenen Grünmischung aus Nano-Silicium (1) mit einem mesogenen Kohlenstoff-Precursor (2) und einem unlöslichen Additiv (7).

Figur 3a zeigt eine homogene Grünmischung vor Beginn der thermischen Behandlung.

Figur 3b zeigt eine beginnende Bildung von Mesophasen (3) während der thermischen Behandlung.

Figur 3c zeigt die wachsenden Mesophasen, die jedoch durch das Additiv am weiteren Wachsen gehindert werden, so dass das Mesophasen-Wachstum gegenüber dem Fall in Figur1 reduziert ist. Die Hinderung kann durch einen für den Zweck dieser Erfindung förderlichen Einfluss des Additivs auf die Viskosität der Mischung während der thermischen Behandlung und/oder durch eine verstärkte Nukleation von Mesophasen während der thermischen Behandlung erfolgen, so dass die Mesophasen kleiner und/oder gleichmäßiger verteilt im Material sind.

Figur 3d zeigt die schematische Zerteilung durch eingezeichnete Bruchlinien des Kompositmaterials auf eine Partikelgröße entsprechend des eingezeichneten Gitterabstands der Linien.

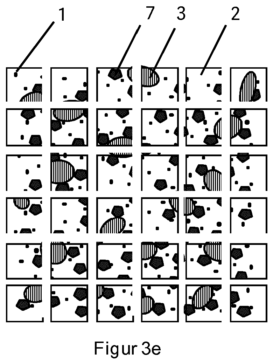

Figur 3e zeigt schematisch das nach der Mahlung erhaltene Pulver.

Im Vergleich zu Figur 1f oder 2d führt das unlösliche Additiv (7) zur einer zusätzlichen Variabilität der möglichen Zusammensetzung der einzelnen Partikel. Die Dichte der einzelnen Partikel ergibt sich aus den Anteilen an Kohlenstoff, Silicium und unlöslichem Additiv (7) in den Partikeln. Durch das durch geeignete Wahl der unlöslichen Additive (7) reduzierte Mesophasen-Wachstum kann insgesamt eine homogenere Partikelzusammensetzung als für das in Figur 1f skizzierte Pulvermaterial erhalten werden.

Nachfolgend wird die vorliegende Erfindung anhand von Ausführungsbeispielen erläutert, wobei die Ausführungsbeispiele keine Einschränkung der Erfindung darstellen.

Allgemeine Verfahrensweise

i) Bereitstellen von Silicium und Kohlenstoff-Precursor.

ii) Erwärmen des Kohlenstoff-Precursors, bis dieser z.B. geschmolzen und dünnflüssig genug für den eingesetzten Mischer ist. Zur Reduktion der Verarbeitungstemperatur oder zum Lösen des Kohlenstoff-Precursors kann ein dafür geeignetes Lösungsmittel eingesetzt werden, in dem der Kohlenstoff-Precursor zumindest bei erhöhter Temperatur (überwiegend) löslich ist. Alternativ kann das Silicium auch bereits in einem für den Kohlenstoff-Precursor geeignetem Lösungsmittel vordispergiert werden und anschließend der Kohlenstoff-Precursor zugegeben werden. Zur Unterstützung der Deagglomeration des Nano-Siliciums kann auch eine Behandlung mit Ultraschall (z.B. mit einer Sonotrode), der Einsatz eines besonders stark scherenden Rührers bei hoher Drehzahl (z.B. Dissolver/Zahnscheiben, Ultra-Turrax®) oder eines sonstigen speziellen Dispergiergeräts (z.B. Korbmühlen, Kolloidmühlen, Rührwerkskugelmühlen, Hochdruckstrahl- und düsenverfahren) eingesetzt werden, wie sie z.B. auch aus der Lack-, Farben-, und Keramik-Industrie bekannt sind.

iii) Vermischen des Siliciums als Pulver oder Dispersion und des geschmolzenen, verflüssigten, erweichten und/oder gelösten Kohlenstoff-Precursor durch mindestens ein geeignetes Rührwerkzeug, z.B. ein Propellerrührer, ein Dissolver, ein Kneter, ein Planetenmischer oder Kombinationen daraus. Ziel des Mischprozesses ist die Erzeugung einer möglichst homogenen Grünmischung mit möglichst deagglomerierten Nano-Silicium-Partikeln, d.h. dass das Nano-Silicium homogen in dem Kohlenstoff-Precursor bzw. der Kohlenstoff-Precursor -Lösungsmittelmischung verteilt ist.

iv) Optionales Abdampfen / Abdestillation von leichtflüchtigen Bestandteilen des Kohlenstoff-Precursors und/oder des der Mischung zugesetzten Lösungsmittels zur Reduktion der Materialmenge für den danach folgenden Schritt der thermischen Behandlung. Dieser Schritt kann z.B. nötig sein, um ein unkontrolliertes Überkochen oder Aufschäumen des Materials während der folgenden thermischen Behandlung zu verhindern, das Lösungsmittel zurückzugewinnen und zu recyceln, die Belastung der thermischen Nachverbrennung im Folgeschritt zu reduzieren, oder Sedimentation bis zum Abschluss der thermischen Behandlung zu reduzieren. Das Abdampfen bzw. Abdestillieren der leichtflüchtigen Bestandteile oder des Lösemittels kann durch Erwärmen der Grünmischung erfolgen, optional unterstützt durch verminderten Druck oder Vakuum und/oder durch Spülen des Gasraums des Behälters mit Gasen oder Gasgemischen wie z.B. Luft, Stickstoff, Argon, Kohlendioxid, etc.

v) Thermische Behandlung der hergestellten Grünmischung aus Schritt iii) oder iv), um den Kohlenstoff-Precursor zu carbonisieren. Die thermische Behandlung der Grünmischung erfolgt in einem geeigneten Behälter (z.B. einem offenen Tiegel aus Stahl, Graphit, oder Keramik) unter Sauerstoffausschluss (z.B. unter Stickstoff- oder Argonatmosphäre oder im Vakuum) durch Erwärmen bis zu einer Endtemperatur innerhalb einer gewissen Zeit in einem dafür geeigneten Ofen, der vorzugsweise mit einer thermischen Nachverbrennung zur Verbrennung der flüchtigen Abgase ausgestattet ist. Nach Erreichen der Endtemperatur kann die hergestellte Mischung optional noch eine gewisse Zeit bei der Endtemperatur im Ofen belassen werden, um die thermische Behandlung abzuschließen. Der Ofen kann zum Beispiel ein Muffelofen, Rohrofen, Kammerofen, Herdwagenofen, Drehrohrofen, Ringofen, Tunnelofen, Durchschubofen, Durchzugofen oder ein beliebiger anderer kontinuierlich oder chargenweise betriebener Ofen mit beliebiger Art und Weise der Wärmeerzeugung (z.B. elektrisch, solarthermisch oder durch Verbrennung von festen, flüssigen, und/oder gasförmigen Brennstoffen) sein. Danach wird das thermisch behandelte C-Si-Kompositmaterial im Ofen durch kontrollierte oder natürliche Abkühlung auf < 400 °C abgekühlt, bevor es aus dem Ofen entnommen wird. Das Abkühlen kann auch außerhalb des eigentlichen Ofens erfolgen, solange das C-Si-Kompositmaterial bis unter 400 °C vor Luft bzw. Sauerstoff geschützt wird, um Oxidation des C-Si-Kompositmaterial zu vermeiden.

vi) Zerkleinern / Mahlen des erhaltenen C-Si-Kompositmaterials auf die gewünschte Partikelgröße durch Brechen und Mahlen, z.B. durch Vorzerkleinerung mit einem Backenbrecher, Kegelbrecher, Walzenbrecher, etc. und anschließender ein- oder mehrstufiger Mahlung z.B. mit einer Prallmühle, Rotormühle, Schlägermühle, Hammermühle, Strahlmühle, Kugelmühle, etc., z.B. mit einem integrierten Sichter zur Einstellung der Partikelgrößenverteilung.

Ausführungsbeispiel 1 (Vergleichsbeispiel, Stand der Technik):

Für die Schritte i)-iii) der allgemeinen Verfahrensweise wurden in einem 5 L Becherglas in einem beheizbaren Ölbad 0,23 kg Nano-Silicium (mittlere Partikelgröße d50 von ca. 100-200 nm, metallische Verunreinigungen < 3 Gew. %, nichtmetallische Verunreinigungen 5-15 Gew. %, kommerziell erhältlich z.B. von Alfa Aesar oder Sigma-Aldrich) in 1,0 kg Tetrahydrofuran (zur Synthese, stabilisiert, kommerziell erhältlich z.B. von VWR) mit einem Dissolver-Rührer (kommerziell erhältlich z.B. von IKA) intensiv dispergiert, die Dispersion im Ölbad auf ca. 50 °C erwärmt und anschließend nach und nach insgesamt 1,0 kg Pech-Granulat, -Pulver oder -Pellets mit einer Erweichungstemperatur von ca. 60 - 120 °C (kommerziell erhältlich z.B. von Deza, Koppers, Rütgers, Bilbaina de Alquitranes) zu der erwärmten Dispersion gegeben. Dabei wurde die Mischung mit einem Dissolver-Rührer (kommerziell erhältlich z.B. von IKA) für ca. 1 Stunde intensiv gerührt, um das Nano-Silicium möglichst zu deagglomerieren, bis sich eine homogene Dispersion des Nano-Siliciums in der Pech-Lösungsmittel-Mischung ergeben hatte. An Stelle des Dissolver-Rührers, wurden für bestimmte Chargen auch Propeller- oder Anker-Rührer eingesetzt. Wenn sich eine Mischung als schlecht rührbar erwies, wurde weiteres Tetrahydrofuran zur Verdünnung hinzugegeben, bis die Viskosität der Mischung für den Mischprozess niedrig genug wurde.

Für Schritt iv) der allgemeinen Verfahrensweise wurde anschließend das Tetrahydrofuran von der Mischung bei Umgebungsdruck abdestilliert, während die Mischung weiter gerührt wurde. Dazu wurde z.B. ein Destillationsaufbau mit 4 - 5 L Dreihalskolben mit aufgesetztem wassergekühltem Liebigkühler und aufgesetztem Rührer mit einem stabilen Metalloder PTFE-Rührflügel genutzt. Die Destillation wird durchgeführt bis entweder mindestens 70% der eingesetzten Menge Tetrahydrofuran wieder aus der Grünmischung entfernt wurden oder bis die Viskosität der Mischung soweit angestiegen war, dass mit dem Rührer keine vollständige Umwälzung und Durchmischung der Masse mehr bei einer Temperatur der Mischung von kleiner 160 - 180 °C möglich war.

Anschließend wurden der Kühler und der Rührer entfernt und zur Vorbereitung für den Schritt v) der allgemeinen Verfahrensweise die heiße Grünmischung entweder - sofern sie noch fließfähig war - noch heiß in einen ausreichend großen lösungsmittel-, pech- und temperaturbeständigen Behälter umgefüllt, oder der Glaskolben wurde nach Abkühlung auf Umgebungstemperatur zerschlagen und die erstarrte Grünmischung wurde kalt in beliebiger Form in einen ausreichend großen lösungsmittel-, pech- und temperaturbeständigen Behälter gegeben. Als Behälter wurden z.B. eine große Blechdose oder ein Blecheimer oder ein Graphittiegel mit mindestens dem doppelten Volumen der Grünmischung verwendet.

Anschließend wurde die Grünmischung in dem Behälter im Schritt v) der allgemeinen Verfahrensweise in einem Kammerofen mit einer thermischen Nachverbrennungsanlage zur Verbrennung der entstehenden Abgase unter Stickstoff-Atmosphäre innerhalb von ca. 50 - 200 h auf eine Endtemperatur von 700 - 1000 °C erwärmt und weitere 6 - 12 h bei der Endtemperatur gehalten. Danach wurde die Heizung des Ofens ausgeschaltet, so dass dieser passiv abkühlte. Während der Abkühlung wurde der Ofenraum weiter mit Stickstoff gespült, um Oxidation zu vermeiden. Sobald die Temperatur im Ofen auf < 200 °C gefallen war, wurde die Stickstoff-Spülung beendet, der Ofen geöffnet und das Material entnommen.

Für den Schritt vi) der allgemeinen Verfahrensweise wurde schließlich das thermisch behandelte Material grob mechanisch z.B. mit einem Hammer zerschlagen und zerkleinert und z.B. mit einem Hammer, Mörser oder Backenbrecher auf max. 1 cm groß Bruchstücke gebrochen. Das gebrochene Material wurde anschließend in einer Prallmühle zur Grobmahlung auf ca. 200 μm Partikelgröße vorgemahlen und in einer zweiten Prallmühle mit Sichter zur Feinmahlung auf die Ziel-Partikelgrößenverteilung gemahlen.

Ergebnis Ausführungsbeispiel 1:

0,51 kg Produktpulver, mittlere Partikelgröße d50: 5 μm, reversible Kapazität 1. Zyklus: 910 mAh/g, Effizienz 1. Zyklus: 84%, reversible Kapazität 40. Zyklus: 690 mAh/g, Dichte-Variationsbereich δ: 0,12.

Zur elektrochemischen Untersuchung der Materialien wurden aus den gemahlenen, pulverförmigen Produkten Elektroden hergestellt und dies anschließend in Labor-Halbzellen (Knopfzellen 2016) mit einem Maccor 4000 Batterietestgerät analysiert. Für die Elektrodenherstellung wurden die Pulver mit CMC Binder (ca. 700.000 g/mol, kommerziell erhältlich von Acros), Leitruß Super P (kommerziell erhältlich von Imerys), Leitgraphit SFG6 (kommerziell erhältlich von Imerys) und deionisiertem Wasser zu einer Tinte mit für den anschließenden Beschichtungsprozess passender Viskosität angemischt und die Tinte mit einem Tisch-Filmziehgerät mit definierter Rakel-Spalthöhe für die gewünschte Flächenmassen-Beladung auf eine Kupferfolie (rau, Dicke 20 μm, kommerziell erhältlich von Schlenk) beschichtet. Die Zusammensetzung der Elektrodenbeschichtung betrug: Aktivmaterial:Leitruß:Leitgraphit:Binder = 88:2:3:7 Massenanteile. Wasser wird nach Bedarf zur Einstellung der Viskosität der Tinte eingesetzt. Die Beschichtung wurde kontrolliert getrocknet und anschließend davon runde Elektrodenplättchen (Durchmesser 14 mm) passend für 2016-Knopfzellen (Werkzeuge und Gehäuseteile für den Knopfzellenbau alle kommerziell erhältlich von Hohsen) ausgestanzt. Durch Wiegen wurde die Elektrodenmasse auf der Kupferfolie bestimmt, wozu die Masse des Kupfers vom Gewicht des Elektrodenplättchens subtrahiert wurde. Die Elektrodenplättchen wurden getrocknet (Vakuum, > 110°C) und anschließend in einer Argon-gefüllten Glovebox mit rund ausgestanzter Lithiumfolie (Durchmesser 16 mm, kommerziell erhältlich von Alfa Aesar) als Gegenelektrode und einem Separator (GF/D, kommerziell erhältlich von Whatman) und einem Elektrolyten zu Knopfzellen (Halbzellen) gebaut. Der Elektrolyt (fertig gemischt kommerziell von UBE) hatte folgende Zusammensetzung: 1 mol/L Lithiumhexafluorophosphat gelöst in Ethylencarbonat:Ethylmethylcarbonat (1:1, vol.) + 2% Vinylencarbonat + 10% Fluoroethylencarbonat.

Die Zellen wurden an einem Batterietestgerät (Maccor, Series 4000) kontrolliert geladen und entladen ("zyklisiert"), wobei die Lithium-Gegenelektrode in dem Halbzellenaufbau auch als Potentialreferenz diente. Der Batterietest wurde wie folgt durchgeführt: Formierung (3 Zyklen): Laden: 0,1 C CC bis 20 mV, CV bis C/100; Entladen: 0,1 C CC bis 1,5 V. Zyklisierung (nach der Formierung): Laden: 0,5 C CC bis 20 mV, CV bis C/20; Entladen: 0,5 C CC bis 1,5 V (CC = constant current, CV = constant voltage).

Für den Einsatz der C-Si-Kompositmaterialien als Anodenmaterial für Lithium-Ionen-Batterien können diese entweder allein oder z.B. beliebig mit Graphit-Anodenmaterial zum Anodenmaterial (Aktivmaterial) gemischt eingesetzt werden, wobei über das Mischungsverhältnis die spezifische Kapazität eingestellt werden kann.

Auch die Elektrochemie der folgenden Ausführungsbeispiele wurden nach der beschriebenen Methode bestimmt

Die Bestimmung des Dichtebereichs des Kompositmaterials erfolgte durch Auftrennung der Partikel in Flüssigkeiten mit definierter Dichte in Anlehnung an die Schwebemethode bzw. die Schweretrennung von Mineralien nach ihrer Dichte in Schwerflüssigkeiten.

Für die Bestimmung des Dichtebereichs des Kompositmaterials wurde die Dichte der Schwerflüssigkeit um den Bereich der mittleren Dichte des Kompositmaterials variiert und damit jeweils die erzielbare Auftrennung des Kompositmaterials in eine "leichtere" bzw. "schwere" Fraktion ermittelt. Partikel, deren Dichte größer als die Dichte der Flüssigkeit ist, können sich absetzen, während Partikel mit genau der Dichte der Flüssigkeit in dieser schwebend bleiben und Partikel, deren Dichte geringer als die Dichte der Flüssigkeit sind, in dieser aufschwimmen. Da die Auftrennung der Partikel nach ihrer Dichte im Gravitationsfeld aufgrund des sehr geringen Dichte-Unterschieds der Partikel zu der Flüssigkeit nur sehr langsam erfolgt, wurde zur Beschleunigung eine Zentrifuge eingesetzt, die thermostatisiert war um einen Temperatureinfluss auf die Dichte der Schwerflüssigkeit zu vermeiden.

Als Schwerflüssigkeiten eignen sich z.B. definierte Mischungen aus Flüssigkeiten mit hoher Dichte (z.B. 1,2-Dibrompropan, 1,3-Dibrompropan, 1, 2, 3-Tribrompropan) mit Flüssigkeiten mit geringerer Dichte (z.B. Toluol, Xylol, Decan, Dodecan). Die Dichte der Flüssigkeiten bzw. deren Mischungen wird mit der Schwingermethode nach DIN EN ISO 15212-1 (2009) bei der Temperatur gemessen, bei der auch das eigentliche Experiment zur Trennung der Partikel erfolgt. Bei allen Versuchsdurchführungen wurde zudem darauf zu geachtet, dass sich die Zusammensetzung und damit die Dichte der gemischten Flüssigkeiten nicht durch Verdunstung leichtflüchtigerer Komponenten veränderte.

Zu Bestimmung des Dichtebereichs des Pulvers wurden etwa 1-2 g Pulver in Zentrifugengläsern mit ca. 15 ml Volumen eingewogen, wobei in jedem Zentrifugenglas genau die gleiche Menge eingewogen wurde, und mit einer Schwerflüssigkeit im Bereich mit genau bekannter Dichte im Bereich der mittleren Dichte des Materials auf min. 10-12 mL Gesamtvolumen aufgefüllt und anschließend dicht verschlossen. Das Flüssigkeitsvolumen war mindestens viermal so groß wie das Schüttvolumen des Pulvers, um eine räumliche Auftrennung der Partikel nach Ihrer Dichte in der Flüssigkeit zu ermöglichen. Zur Vermeidung von Agglomeraten oder Lufteinschlüssen wurde die Suspension für 15 min in einem Ultraschallbad behandelt.

Es wurde eine Reihe von Proben mit jeweils leicht unterschiedlichen Schwerflüssigkeiten angesetzt, deren Dichte in 0,01 g/cm$^3$-Schritten variiert. Anschließend wurden alle Proben in der Zentrifuge bei maximal möglicher Drehzahl für mindestens 48-72 h zentrifugiert.

Bei Proben, bei denen sich das Pulver dann vollständig unten abgesetzt hat, war die Dichte der Schwerflüssigkeit kleiner als die Dichte aller Pulverpartikel. Bei Proben, bei denen das Pulver dann vollständig oben aufschwamm, war die Dichte der Schwerflüssigkeit größer als die Dichte aller Pulverpartikel. In beiden Fällen gab die Dichte der jeweils eingesetzten Schwerflüssigkeiten somit eine untere bzw. obere Grenze für die mögliche Dichte der Pulverpartikel an.

Im Dichtebereich dazwischen wurde die Flüssigkeit mit den darin suspendierten Partikeln in drei gleich große Volumenfraktionen (oberes Drittel, mittleres Drittel, und unteres Drittel) aufgeteilt, indem mit Pipetten die einzelnen Teilvolumina der Suspensionen nacheinander aus dem Zentrifugenglas entnommen wurden. Die drei einzelnen Fraktionen wurden anschließend zur Gewichtskonstanz eingetrocknet und der Pulverrückstand je Fraktion gewogen (Genauigkeit min. 0,1% der Gesamtmasse des eingesetzten Kompositmaterials). Somit konnte der Anteil der Partikel bestimmt werden, der sich abgesetzt hat (unteres Drittel) bzw. der aufgeschwommen ist (oberes Drittel). Die mittlere Fraktion, bei der die Partikel genau die Dichte der Schwerflüssigkeit haben, dient zur Kontrolle und ggf. Korrektur der Massen in der unteren und oberen Fraktion, da davon auszugehen war, dass Partikel mit dieser Dichte in allen drei Fraktionen gleichmäßig verteilt vorliegen.

Durch Variation der Dichte der Schwerflüssigkeiten werden in sukzessiven analogen Experimenten die Dichten der Schwerflüssigkeiten gesucht, bei denen nur noch 5 Gew. % des eingesetzten Kompositmaterials aufschwammen bzw. sich absetzten. Dazu wurden von den Experimenten mit jeweils leicht unterschiedlichen Dichten der Schwerflüssigkeiten die Massenanteile in den einzelnen Fraktionen gegen die jeweiligen Dichten der Schwerflüssigkeiten aufgetragen und aus den Daten die Dichte der Schwerflüssigkeiten ermittelt, für die sich 5 Gew. % des eingesetzten Kompositmaterials in der oberen bzw. unteren Fraktion befanden. Diese Dichten entsprachen somit dem unteren Dichtegrenzwert $\rho^*_1$ oder dem oberen Dichtegrenzwert $\rho^*_2$ und innerhalb des Dichtebereichs zwischen $\rho^*_1$ und $\rho^*_2$ lagen 90 Gew. % der Partikel des Kompositmaterials. Der Betrag der Differenz $|\rho-\rho^*_{1,2}|$ zwischen der mittleren Dichte $\rho$ des Kompositmaterials und dem unteren Dichtegrenzwert $\rho^*_1$ bzw. oberen Dichtegrenzwert $\rho^*_2$ ist der Betrag der Variationsbreite $\delta$ der Dichte. Waren die Beträge der Differenzen $|\rho-\rho^*_{1,2}|$ zwischen der mittleren Dichte $\rho$ des Kompositmaterials und dem unteren Dichtegrenzwert $\rho^*_1$ oder dem oberen Dichtegrenzwert $\rho^*_2$ nicht gleich, wurde für die Festlegung des Betrags der Variationsbreite $\delta$ der größere der beiden Beträge verwendet.

Auch die Dichtebereiche der folgenden Ausführungsbeispiele wurden nach der beschriebenen Methode bestimmt

Ausführungsbeispiel 2:

Wie Ausführungsbeispiel 1, aber mit schnellerer thermischer Behandlung im Schritt v). Dazu wurden die Schritte i) bis iv) sowie vi) im Ausführungsbeispiel 2 wie im Ausführungsbeispiel 1 durchgeführt. Die thermische Behandlung des Schrittes v) erfolgt im Ausführungsbeispiel 2 hingegen innerhalb von 3 - 12 h. Die Grünmischung wurde dazu in dem Behälter in einem Kammerofen mit einer thermischen Nachverbrennungsanlage zur Verbrennung der entstehenden Abgase unter Stickstoff-Atmosphäre innerhalb von ca. 3 - 12 h auf eine Endtemperatur von 800 - 1000 °C erwärmt und anschließend optional weitere 1 - 3 h bei der Endtemperatur gehalten. Durch die deutlich schnellere Erwärmung bis zur Endtemperatur wurden in relativ kurzer Zeit große Mengen Pyrolysegase freigesetzt, wofür der Ofen und dessen thermische Nachverbrennung ausgelegt waren. Außerdem war das Risiko des Überschäumens größer, weshalb ein ausreichend großer Behälter genutzt wurde. Danach wurde die Heizung des Ofens ausgeschaltet, so dass dieser passiv abkühlte. Während der Abkühlung wurde der Ofenraum weiter mit Stickstoff gespült, um Oxidation zu vermeiden. Sobald die Temperatur im Ofen auf < 200 °C gefallen war, wurde die Stickstoff-Spülung beendet, der Ofen geöffnet und das Material entnommen.

Ergebnis Ausführungsbeispiel 2:

0,53 kg Produktpulver, mittlere Partikelgröße d50: 5 $\mu$m, reversible Kapazität 1. Zyklus: 1110 mAh/g, Effizienz 1. Zyklus: 85%, reversible Kapazität 40. Zyklus: 780 mAh/g, Dichte-Variationsbereich $\delta$: 0,06.

Ausführungsbeispiele 3a-c:

Ausführungsbeispiel 3a:

Im Unterschied zum Ausführungsbeispiel 1 wurde im Ausführungsbeispiel 3a zusätzlich im Schritt iii) der allgemeinen Verfahrensweise ein pulverförmiges, im Kohlenstoff-Precursor unlösliches Additiv hinzugefügt und mit in die Grünmischung eingemischt, so dass das Additiv zum Schluss wie das Nano-Silicium homogen in der Grünmischung verteilt vorlag.

Für das Ausführungsbeispiel 3a wurden in den Schritten i) bis iii) der allgemeinen Verfahrensweise in einem 5 L Becherglas in einem beheizbaren Ölbad 0,23 kg Nano-Silicium (mittlere Partikelgröße d50 von ca. 100-200 nm, metallische Verunreinigungen < 3 Gew. %, nichtmetallische Verunreinigungen 5-15 Gew. %, kommerziell erhältlich z.B. von Alfa Aesar oder Sigma-Aldrich) in 1,2 kg Tetrahydrofuran (zur Synthese, stabilisiert, kommerziell erhältlich z.B. von VWR) mit einem Dissolver-Rührer (kommerziell erhältlich z.B. von IKA) intensiv dispergiert, die Dispersion im Ölbad auf ca. 50 °C erwärmt und anschließend nach und nach insgesamt 0,8 kg Pech-Granulat, -Pulver oder -Pellets mit einer Erweichungstemperatur von ca. 60 - 120 °C (kommerziell erhältlich z.B. von Deza, Koppers, Rütgers, Bilbaina de Alquitranes) sowie 0,1 kg Graphitpulver mit einer mittleren Partikelgröße d50 von 3 - 6 $\mu$m (kommerziell erhältlich z.B. von Imerys, Graphit Kropfmühl, SGL Carbon) als Additiv zu der erwärmten Dispersion gegeben. Dabei wurde die Mischung mit einem Dissolver-Rührer (kommerziell erhältlich z.B. von IKA) für ca. 1 Stunde intensiv gerührt, um das Nano-Silicium und das Graphitpulver möglichst gut zu deagglomerieren, bis sich eine homogene Dispersion des Nano-Siliciums und des Graphitpulvers in der Pech-Lösungsmittel-Mischung ergeben hat.

Anschließend wurden die Schritte iv) - vi) der allgemeinen Verfahrensweise wie im Ausführungsbeispiel 1 durchgeführt.

Ergebnis Ausführungsbeispiel 3a:

0,58 kg Produktpulver, mittlere Partikelgröße d50: 5 $\mu$m, reversible Kapazität 1. Zyklus: 1120 mAh/g, Effizienz 1. Zyklus: 86%, reversible Kapazität 40. Zyklus: 800 mAh/g, Dichte-Variationsbereich $\delta$ ~ 0,04.

Ausführungsbeispiel 3b:

Wie Ausführungsbeispiel 3a, aber mit einem nm-skaligen pulverförmigen im Kohlenstoff-Precursor unlöslichen Additiv im Schritt iii). Anstelle des Graphitpulvers des Ausführungsbeispiels 3a wurde im Ausführungsbeispiel 3b Carbon Black als Additiv eingesetzt.

Für das Ausführungsbeispiel 3b wurden in den Schritten i) bis iii) der allgemeinen Verfahrensweise in einem 5 L Becherglas in einem beheizbaren Ölbad 0,23 kg Nano-Silicium (mittlere Partikelgröße d50 von ca. 100-200 nm, metallische Verunreinigungen < 3 Gew. %, nichtmetallische Verunreinigungen 5-15 Gew. %, kommerziell erhältlich z.B. von Alfa Aesar oder Sigma-Aldrich) in 2,0 kg Tetrahydrofuran (zur Synthese, stabilisiert, kommerziell erhältlich z.B. von VWR) mit einem Dissolver-Rührer (kommerziell erhältlich z.B. von IKA) intensiv dispergiert, die Dispersion im Ölbad auf ca. 50 °C erwärmt und anschließend nach und nach insgesamt 0,8 kg Pech-Granulat, -Pulver oder -Pellets mit einer Erweichungstemperatur von ca. 60 - 120 °C (kommerziell erhältlich z.B. von Deza, Koppers, Rütgers, Bilbaina de Alquitranes) sowie 0,1 kg Carbon Black mit einer mittleren Primär-Partikelgröße d50 von < 1 $\mu$m (kommerziell erhältlich z.B. von Imerys, Orion, Cabot) als Additiv zu der erwärmten Dispersion gegeben. Dabei wurde die Mischung mit einem Dissolver-Rührer und/oder einem Propeller- oder Anker-Rührer (kommerziell erhältlich z.B. von IKA) für ca. 1 Stunde intensiv gerührt, um das Nano-Silicium und das Carbon Black-Pulver möglichst gut zu deagglomerieren, bis sich eine homogene Dispersion des Nano-Siliciums und des Carbon Blacks in der Pech-Lösungsmittel-Mischung ergeben hat.

Anschließend werden die Schritte iv) - vi) der allgemeinen Verfahrensweise wie im Ausführungsbeispiel 3a durchgeführt.

Ergebnis Ausführungsbeispiel 3b:

0,56 kg Produktpulver, mittlere Partikelgröße d50: 5 $\mu$m, reversible Kapazität 1. Zyklus 1100 mAh/g, Effizienz 1. Zyklus: 83%, reversible Kapazität 40. Zyklus: 780 mAh/g, Dichte-Variationsbereich $\delta$: 0,03.

Ausführungsbeispiel 3c:

Wie Ausführungsbeispiel 3a oder Ausführungsbeispiel 3b, aber mit zwei unterschiedlichen im Kohlenstoff-Precursor unlöslichen Additiven im Schritt iii), so dass die beiden Additive zum Schluss wie das Nano-Silicium homogen in der Grünmischung verteilt vorlagen.

Im Ausführungsbespiel 3c wurde eine Kombination des Graphitpulvers als Additiv im Ausführungsbeispiel 3a und des Carbon Blacks als Additiv im Ausführungsbeispiel 3b mit einem Massenverhältnis von 1:1 eingesetzt, d.h. 0,05 kg des Graphitpulvers aus Ausführungsbeispiel 3a und 0,05 kg des Carbon Blacks aus Ausführungsbeispiel 3b. Die übrigen Materialien (Typen, Mengen) und Schritte des Ausführungsbeispiels 3c wurden wie im Ausführungsbeispiel 3b eingesetzt und durchgeführt.

Ergebnis Ausführungsbeispiel 3c:

0,57 kg Produktpulver, mittlere Partikelgröße d50: 5 $\mu$m, reversible Kapazität 1. Zyklus: 1110 mAh/g, Effizienz 1. Zyklus: 85%, reversible Kapazität 40. Zyklus: 790 mAh/g. Dichte-Variationsbereich $\delta$: 0,04.

Ausführungsbeispiele 4a-c:

Ausführungsbeispiel 4a:

Im Unterschied zum Ausführungsbeispiel 1 wurde im Ausführungsbeispiel 4a zusätzlich im Schritt iii) bzw. iv) der allgemeinen Verfahrensweise ein nicht Mesophasen bildendes Additiv hinzugefügt und mit in die Grünmischung eingemischt, so dass das Additiv zum Schluss homogen in der Grünmischung verteilt vorlag.

Für das Ausführungsbeispiel 4a wurden in den Schritten i) bis iii) der allgemeinen Verfahrensweise in einem 5 L Becherglas in einem beheizbaren Ölbad 0,25 kg Nano-Silicium (mittlere Partikelgröße d50 von ca. 100-200 nm, metallische Verunreinigungen < 3 Gew. %, nichtmetallische Verunreinigungen 5-15 Gew % , kommerziell erhältlich z.B. von Alfa Aesar oder Sigma-Aldrich) in 1,0 kg Tetrahydrofuran (zur Synthese, stabilisiert, kommerziell erhältlich z.B. von VWR) mit einem Dissolver-Rührer (kommerziell erhältlich z.B. von IKA) intensiv dispergiert, die Dispersion im Ölbad auf ca. 50 °C erwärmt und anschließend nach und nach insgesamt 0,55 kg Pech-Granulat, -Pulver oder - Pellets mit einer Erweichungstemperatur von ca. 60 - 120 °C (kommerziell erhältlich z.B. von Deza, Koppers, Rütgers, Bilbaina de Alquitranes) zu der erwärmten Dispersion gegeben. Dabei wurde die Mischung mit einem Dissolver-Rührer (kommerziell erhältlich z.B. von IKA) für ca. 1 Stunde intensiv gerührt, um das Nano-Silicium möglichst gut zu deagglomerieren, bis sich eine homogene Dispersion des Nano-Siliciums und in der Pech-Lösungsmittel-Mischung ergeben hat. Anschließend wurde 0,5 kg Phenolharz (Novolak Pulver mit einer Erweichungstemperatur von ca. 60 - 120°C) (kommerziell erhältlich z.B. von Süd-West-Chemie, Allnex, Hexion) als Additiv nach und nach hinzugefügt und nochmals ca. 1 Stunde weiter intensiv gerührt. Anschließend werden die Schritte iv) - vi) der allgemeinen Verfahrensweise wie im Ausführungsbeispiel 1 durchgeführt.

Wenn sich ein Additiv in der Pech-Lösemittel-Mischung unterhalb der Schmelztemperatur des Additivs nur schwierig einmischen ließ, war es zur Unterstützung der Mischung mit dem Additiv hilfreich, bereits während des Mischprozesses mit Schritt iv) der allgemeinen Verfahrensweise zu beginnen, d.h. das Lösemittel nach und nach abzudampfen und die Temperatur der Mischung bis über die Schmelztemperatur des Additivs zu erhöhen.

Ergebnis Ausführungsbeispiel 4a:

0,45 kg Produktpulver, mittlere Partikelgröße d50: 5 $\mu$m, reversible Kapazität 1. Zyklus: 1070 mAh/g, Effizienz 1. Zyklus: 82%, reversible Kapazität 40. Zyklus: 770 mAh/g, Dichte-Variationsbereich $\delta$: 0,04.

Ausführungsbeispiel 4b:

Im Unterschied zum Ausführungsbeispiel 1 wurde im Ausführungsbeispiel 4b zusätzlich im Schritt iii) bzw. iv) der allgemeinen Verfahrensweise ein nicht Mesophasen bildendes vernetzbares Additiv hinzugefügt und mit in die Grünmischung eingemischt, so dass das Additiv zum Schluss homogen in der Grünmischung verteilt vorlag.

Für das Ausführungsbeispiel 4b wurden in den Schritten i) bis iii) der allgemeinen Verfahrensweise in einem 5 L Becherglas in einem beheizbaren Ölbad, 0,23 kg Nano-Silicium (mittlere Partikelgröße d50 von ca. 100-200 nm, metallische Verunreinigungen < 3 Gew. %, nichtmetallische Verunreinigungen 5-15 Gew. %, kommerziell erhältlich z.B. von Alfa Aesar oder Sigma-Aldrich) in 1,0 kg Tetrahydrofuran (zur Synthese, stabilisiert, kommerziell erhältlich z.B. von VWR) mit einem Dissolver-Rührer (kommerziell erhältlich z.B. von IKA) intensiv dispergiert, die Dispersion im Ölbad auf ca. 50 °C erwärmt und anschließend nach und nach insgesamt 0,8 kg Pech-Granulat, -Pulver oder -Pellets mit einer Erweichungstemperatur von ca. 60 - 120 °C (kommerziell erhältlich z.B. von Deza, Koppers, Rütgers, Bilbaina de Alquitranes) zu der erwärmten Dispersion gegeben. Dabei wurde die Mischung mit einem Dissolver-Rührer und/oder einem Propeller- oder Anker-Rührer (kommerziell erhältlich z.B. von IKA) für ca. 1 Stunde intensiv gerührt, um das Nano-Silicium möglichst gut zu deagglomerieren, bis sich eine homogene Dispersion des Nano-Siliciums und in der Pech-Lösungsmittel- Mischung ergeben hat. Anschließend wurde 0,45 kg ungesättigtes Polyesterharz (kommerziell erhältlich z.B. von Reichhold, Synthopol, BÜFA) als Additiv und 6 g 2,3-Dimethyl-2,3-diphenylbutan (kommerziell erhältlich z.B. von Acros, AkzoNobel) als Radikalinitiator hinzugefügt und nochmals ca. 1 Stunde weiter intensiv gerührt. Anschließend wurden die Schritte iv) - vi) der allgemeinen Verfahrensweise wie im Ausführungsbeispiel 1 durchgeführt. Bei der thermischen Behandlung in Schritt v) trat durch das Additiv bzw. dessen Pyrolyse starkes Schäumen auf, weswegen der Behälter für das Material in diesem Schritt ausreichend groß dimensioniert werden musste.

Ergebnis Ausführungsbeispiel 4b:

0,49 kg Produktpulver, mittlere Partikelgröße d50: 5 $\mu$m, reversible Kapazität 1. Zyklus: 1100 mAh/g, Effizienz 1. Zyklus: 84%, reversible Kapazität 40. Zyklus: 780 mAh/g, Dichte-Variationsbereich $\delta$: 0,04.

Ausführungsbeispiel 4c:

Im Unterschied zum Ausführungsbeispiel 1 wurde im Ausführungsbeispiel 4c zusätzlich im Schritt iii) bzw. iv) der allgemeinen Verfahrensweise ein Vernetzungsmittel als Additiv hinzugefügt und mit in die Grünmischung eingemischt, so dass das Additiv zum Schluss homogen in der Grünmischung verteilt vorlag.

Im Ausführungsbeispiel 4c wurden im Unterschied zum Ausführungsbeispiel 1 im Schritt i) - iii) 0,85 kg Pech-Granulat, -Pulver oder -Pellets mit einer Erweichungstemperatur von ca. 60 - 120 °C (kommerziell erhältlich z.B. von Deza, Koppers, Rütgers, Bilbaina de Alquitranes) eingesetzt. Die übrigen Materialien (Typen, Mengen) und Schritte des Ausführungsbeispiels 4c werden wie in Ausführungsbeispiel 1 eingesetzt und durchgeführt. Im Schritt iii) der allgemeinen Verfahrensweise wurden nach abgeschlossener Dispersion des Nano-Siliciums noch 0,09 kg Schwefel (Pulver, Reinheit min. 99%, kommerziell erhältlich z.B. von VWR, Carl-Roth, Sigma-Aldrich) hinzugefügt und für etwa 1/2 Stunde mit in die Grünmischung eingemischt, so dass das Additiv homogen in der Grünmischung verteilt vorlag, bevor mit Schritt iv) begonnen wurde. Durch die Reaktion des Schwefels mit dem Pech beim Erwärmen im Schritt iv) wurde ab etwa 120 - 150 °C Schwefelwasserstoff freigesetzt. Um Überschäumen im Schritt iv) oder im Schritt v) der allgemeinen Verfahrensweise zu verhindern, war eine langsame Temperatursteigerung, ein ausreichend großes Reaktionsgefäß und ein kräftiger Rührer hilfreich.

Die Reaktionsgase können während Schritt iv) durch Spülen des Kolbens mit Stickstoff in eine Waschflasche mit Natronlauge eingeleitet werden, um den Schwefelwasserstoff zu absorbieren, oder der Schwefelwasserstoff wird während der thermischen Behandlung in Schritt v) in einer entsprechend ausgelegten thermischen Nachverbrennung mit Abgasnachreinigung mit verbrannt.

Ergebnis Ausführungsbeispiel 4c:

0,55 kg Produktpulver, mittlere Partikelgröße d50: 5 μm, reversible Kapazität 1. Zyklus: 1090 mAh/g, Effizienz 1. Zyklus: 82%, reversible Kapazität 40. Zyklus: 750 mAh/g. Dichte-Variationsbereich $\delta$: ~ 0,03.

Auf Grundlage der Beispiele und Figuren erhält man erfindungsgemäße Kompositmaterialien mit besonders engen Dichteverteilungen insbesondere dann, wenn man bei dem Verfahren zur Herstellung des Kompositmaterials

- die Temperatur der Mischung nur möglichst kurz in einem Temperaturfenster hält, in dem ein Teil der Mischung Mesophasen ausbildet oder geschmolzen vorliegt, denn in Mesophasen vorliegende oder geschmolzene Mischungsbestandteile begünstigen die Bildung anisotroper Bereiche, und/oder
- ein partikelförmiges Additiv (unlösliches Additiv) zugibt, und/oder
- ein mischbares Additiv zugibt.

Wenn man zur Umwandlung des Kohlenstoff-Precursors in der Mischung in Kohlenstoff die Temperatur der Mischung auf Grund der Gegebenheiten der Produktionsanlagen nur sehr langsam steigern kann, empfiehlt sich die Zugabe von Additiven zur Mischung, um die erfindungsgemäße Dichteverteilung zu erreichen. Dies kann z.B. dann erforderlich sein, wenn eine große Menge der Mischung mit großem Volumen und vergleichsweise kleiner Oberfläche in einem Ofen erwärmt wird, in dem die thermische Behandlung erfolgen soll. Der Ansatz wird dann z.B. aufgrund der begrenzten Wärmeleitfähigkeit und der hohen Wärmekapazität der Mischung, was beides zu einem thermisch trägen Verhalten führt, nur langsam erwärmt, so dass die Gefahr ausgeprägter Mesophasenbildung bestehen kann, wenn keine Additive zugegeben werden. Die Additive führen dann zu einer Reduktion der Mesophasenbildung und damit letztlich in der Regel zu einer homogeneren Dichte des erhaltenen Kompositmaterials.

Ist hingegen eine schnellere Steigerung der Temperatur der Mischung möglich (z.B. wenn man die Mischung in kleinen Portionen oder fein in einer Heizzone verteilt bzw. in einen heißen Ofen einbringt, um die mögliche Aufheizrate der Mischung zu steigern, indem z.B. die wärmeexponierte Oberfläche im Verhältnis zur Masse der Mischung erhöht wird oder jeweils nur ein sehr kleines Mischungsvolumen in einem schnell aufheizenden Ofen bzw. in einer heißen Zone erhitzt wird), braucht meist kein Additiv zugegeben zu werden, um eine Mesophasenbildung so weit zu unterdrücken, dass sich eine erfindungsgemäße Dichteverteilung einstellt.

Selbstverständlich kann auch bei einer schnellen Steigerung der Temperatur der Mischung ein Additiv zugegeben werden. In der Regel führt dies zu einer weiteren Steigerung der Homogenität (also zu einer noch engeren Dichteverteilung) des erhaltenen Kompositmaterials.

Bezugszeichenliste

1    Nano-Silicium
2    Kohlenstoff-Precursor
3    Mesophase
4    Partikel mit Kohlenstoff und Silicium
5    Partikel mit reinem Kohlenstoffmaterial
6    Silicium angereicherte Partikel

7    unlösliches Additiv

**Patentansprüche**

**1.** Pulverförmiges Kompositmaterial umfassend Silicium-Partikel, die wenigstens teilweise von Kohlenstoff umhüllt sind, wobei der Anteil an Silicium in dem Kompositmaterial 1-80 Gew.-% beträgt,
**dadurch gekennzeichnet, dass**

mindestens 90 Gew.-% des Kompositmaterials in einem Dichtebereich zwischen einem unteren Dichtegrenzwert $\rho^*{}_1$ und einem oberen Dichtegrenzwert $\rho^*{}_2$ liegen, wobei für die Dichtegrenzwerte

$$\rho^*{}_{1,2} = (1 \pm \delta) \cdot \rho$$

gilt und $\rho$ die mittlere Dichte des Kompositmaterials beschreibt und $\pm\delta$ den Variationsbereich zwischen oberem Dichtegrenzwert $\rho^*{}_2$ und unterem Dichtegrenzwert $\rho^*{}_1$ bestimmt, wobei für den Betrag von $\delta < 0{,}10$ gilt, wobei die Bestimmung des Dichtebereichs des pulverförmigen Kompositmaterials durch Auftrennung seiner Partikel in Flüssigkeiten mit definierter Dichte erfolgt;
und wobei die Kompositmaterial die folgende Bedingung erfüllt:

$$d50_{Si} \cdot \frac{p_c}{p_{Si}} > s$$

wobei
$d50_{Si}$ für die elektronenmikroskopisch bestimmte zahlenmittlere Größe der Siliciumpartikel in der Einheit "µm" steht,
$p_c$ für den Anteil an Kohlenstoff am Kompositmaterial, ausgedrückt in Gew. %, steht, $p_{Si}$ für den Anteil an Silicium am Kompositmaterial, ausgedrückt in Gew. %, steht, und s ein Sicherheitsparameter ist, der 0,02 beträgt.

**2.** Kompositmaterial nach Anspruch 1, wobei das Kompositmaterial eine volumenbasierte Partikelgrößenverteilung mit einer mittleren Partikelgröße (d50) von 100 nm bis 500 µm, insbesondere von 0,5 bis 60 µm aufweist, wobei die mittlere Partikelgröße (d50) als Medianwert $X_{50,3}$ zu verstehen ist, bei dem die unter Zuhilfenahme einer lasergranulometrischen Methode gemäß ISO 13320-2009 bestimmten Verteilungssummenkurve $Q_3(X)$ der Partikel-größenverteilung 50 % beträgt.

**3.** Kompositmaterial nach Anspruch 1, wobei mindestens 3 Gew.-% des Kompositmaterials in Dichtebereich(en) außerhalb eines sich von einem unteren Dichtegrenzwerts $\rho^*{}_3$ bis zu einem oberen Dichtegrenzwert $\rho^*{}_4$ erstreck-enden Bereich liegen, wobei für die Dichtegrenzwerte $\rho^*{}_{3,4}$

$$\rho^*{}_{3,4} = (1 \pm \delta_{min}) \cdot \rho$$

gilt und $\rho$ die mittlere Dichte des Kompositmaterials beschreibt und $\pm \delta_{min}$ den Variationsbereich zwischen oberem Dichtegrenzwert $\rho^*{}_4$ und unterem Dichtegrenzwert $\rho^*{}_3$ bestimmt, wobei für den Betrag von $\delta_{min} \geq 0{,}005$ gilt.

**4.** Kompositmaterial nach Anspruch 1, wobei das Silicium wenigstens teilweise kristallin ist.

**5.** Verfahren zur Herstellung eines Kompositmaterials nach einem der Ansprüche 1 bis 4, umfassend folgende Schritte:

a) bereitstellen von Silicium
b) bereitstellen mindestens eines Kohlenstoff-Precursors
c) herstellen einer Mischung umfassend die Komponenten aus Schritt a) und b) und
d) erzeugen des Kompositmaterials durch Weiterverarbeitung der Mischung aus Schritt c) umfassend eine thermische Behandlung und Zerkleinerung.

**6.** Verfahren nach Anspruch 5, wobei der Kohlenstoff-Precursor aus Schritt b) ausgewählt wird aus der Gruppe Pech, Teer, Biomaterialien, Polymere und harzbasierte Rohstoffe mit einer Kohlenstoffausbeute >5% oder Mischungen hieraus.

7. Verfahren nach Anspruch 5, wobei die in Schritt c) erhaltene Mischung homogen verteilt vorliegt und dass der Temperaturverlauf der thermischen Behandlung und die Zerkleinerung in Schritt d) so auf die in Schritt c) erhaltene Mischung abgestimmt werden, dass ein Kompositmaterial gemäß Anspruch 1 erhalten wird.

8. Verfahren nach Anspruch 5, wobei zusätzlich zu den in Schritt a) und b) bereitgestellten Stoffen mindestens ein Additiv bereitgestellt wird und die in Schritt c) hergestellte Mischung das Additiv umfasst.

9. Verfahren nach Anspruch 8, wobei das mindestens eine Additiv eine in dem mindestens einen Kohlenstoff-Precursor unlösliche Komponente ist.

10. Verfahren nach Anspruch 8, wobei das mindestens eine Additiv eine mit dem Kohlenstoff-Precursor mischbare Komponente, ausgewählt aus der Gruppe der Harze, Polymere, Polymerisations-Initiatoren, Polymer-Vernetzungsmittel oder Mischungen davon ist.

11. Verwendung des Kompositmaterials nach einem der Ansprüche 1 bis 4 als einzige Komponente oder mindestens eine Komponente des Aktivmaterials für die Anode von Lithium-Ionen-Batterien, Lithium-Schwefel-Batterien und/oder Natrium-Ionen-Batterien.

## Claims

1. Pulverulent composite material comprising silicon particles at least partially coated with carbon, wherein the proportion of silicon in the composite material is 1-80% by weight, **characterised in that** at least 90% by weight of the composite material is in a density range between a lower density limit value $\rho^*_1$ and an upper density limit value $\rho^*_2$, wherein

$$\rho^*_{1,2} = (1 \pm \delta) \cdot \rho$$

applies to the density limit values and $\rho$ describes the average density of the composite material and $\pm\delta$ determines the range of variation between the upper density limit value $\rho^*_2$ and the lower density limit value $\rho^*_1$, wherein < 0.10 applies to the amount of $\delta$,
wherein the density range of the pulverulent composite material is determined by separating its particles into liquids of defined density;
and wherein the composite material satisfies the following condition:

$$d50_{Si} \cdot \frac{p_c}{p_{Si}} > s$$

wherein
$d50_{Si}$ is the electron-microscopically determined number-average size of the silicon particles in the unit "$\mu$m", $p_c$ is the proportion of carbon in the composite material, expressed in % by weight, $p_{Si}$ is the proportion of silicon in the composite material, expressed in % by weight, and s is a safety parameter that amounts to 0.02.

2. Composite material according to claim 1, wherein the composite material has a volume-based particle size distribution with an average particle size (d50) of 100 nm to 500 $\mu$m, in particular of 0.5 to 60 $\mu$m, wherein the average particle size (d50) is to be understood as a median value $X_{50.3}$, in which the cumulative distribution curve $Q_3(X)$ of the particle size distribution, determined using a laser-granulometric method according to ISO 13320-2009, is 50%.

3. Composite material according to claim 1, wherein at least 3% by weight of the composite material is in density range(s) outside a range extending from a lower density limit value $\rho^*_3$ to an upper density limit value $\rho^*_4$, wherein

$$\rho^*_{3,4} = (1 \pm \delta_{min}) \cdot \rho$$

applies to the density limit values $\rho^*_{3,4}$ and $\rho$ describes the average density of the composite material and $\pm \delta_{min}$ determines the range of variation between the upper density limit value $\rho^*_4$ and the lower density limit value $\rho^*_3$, wherein ≥0.005 applies to the amount of $\delta_{min}$.

4. Composite material according to claim 1, wherein the silicon is at least partially crystalline.

5. Method for producing a composite material according to any of claims 1 to 4, comprising the following steps:

   a) providing silicon
   b) providing at least one carbon precursor
   c) preparing a mixture comprising the components of steps a) and b) and
   d) producing the composite material by further processing the mixture from step c) comprising a thermal treatment and comminution.

6. Method according to claim 5, wherein the carbon precursor of step b) is selected from the group consisting of pitch, tar, biomaterials, polymers and resin-based raw materials having a carbon yield of >5%, or mixtures thereof.

7. Method according to claim 5, wherein the mixture obtained in step c) is homogeneously distributed and the temperature profile of the thermal treatment and the comminution in step d) are matched to the mixture obtained in step c) in such a way that a composite material according to claim 1 is obtained.

8. Method according to claim 5, wherein, in addition to the substances provided in step a) and b), at least one additive is provided and the mixture prepared in step c) comprises the additive.

9. Method according to claim 8, wherein the at least one additive is a component insoluble in the at least one carbon precursor.

10. Method according to claim 8, wherein the at least one additive is a component miscible with the carbon precursor selected from the group of resins, polymers, polymerisation initiators, polymer crosslinking agents, or mixtures thereof.

11. Use of the composite material according to any of claims 1 to 4 as the only component or at least one component of the active material for the anode of lithium-ion batteries, lithium-sulphur batteries and/or sodium-ion batteries.


**Revendications**

1. Matériau composite en poudre comprenant des particules de silicium qui sont au moins partiellement enrobées de carbone, dans lequel la proportion de silicium dans le matériau composite va de 1 à 80 % en poids,
   **caractérisé en ce que**

   au moins 90 % en poids du matériau composite se situent dans une plage de densité comprise entre une valeur limite de densité inférieure $\rho^*_1$ et une valeur limite de densité supérieure $\rho^*_2$, dans lequel, pour les valeurs limites de densité,

$$\rho^*_{1,2} = (1 \pm \delta) \cdot \rho$$

   s'applique, et p représente la densité moyenne du matériau composite et $\pm \delta$ détermine la plage de variation entre la valeur limite de densité supérieure $\rho^*_2$ et la valeur limite de densité inférieure $\rho^*_1$ dans lequel la valeur absolue de $\delta$ est < 0,10,
   dans lequel la détermination de la plage de densité du matériau composite en poudre est effectuée par séparation de ses particules dans des liquides de densités définies ;
   et dans lequel le matériau composite satisfait à la condition suivante :

$$d50_{Si} \cdot \frac{p_c}{p_{Si}} > s$$

   dans lequel
   $d50_{Si}$ représente la taille moyenne en nombre des particules de silicium, déterminée par microscopie électronique, exprimée selon l'unité « $\mu m$ »,
   $p_c$ représente la proportion de carbone dans le matériau composite, exprimée en % en poids, $p_{Si}$ représente la proportion de silicium dans le matériau composite, exprimée en % en poids, et s représente un paramètre de sécurité qui vaut 0,02.

2. Matériau composite selon la revendication 1, dans lequel le matériau composite a une distribution de tailles des particules basée sur le volume comportant une taille moyenne des particules (d50) allant de 100 nm à 500 $\mu$m, en particulier de 0,5 à 60 $\mu$m, dans lequel la taille moyenne des particules (d50) doit être comprise comme la valeur médiane $X_{50,3}$, pour laquelle la courbe de sommes de distribution $Q_3(X)$ de la distribution de tailles des particules, déterminée à l'aide d'un procédé de granulométrie laser selon la norme ISO 13320-2009, est de 50 %.

3. Matériau composite selon la revendication 1, dans lequel au moins 3 % en poids du matériau composite se situent dans la ou les plages de densité en dehors d'une plage s'étendant d'une valeur limite de densité inférieure $\rho^*_3$ à une valeur limite de densité supérieure $\rho^*_4$, dans lequel, pour les valeurs limites de densité $\rho^*_{3,4}$

$$\rho^*_{3,4} = (1 \pm \delta_{min}) \cdot \rho$$

s'applique et p décrit la densité moyenne du matériau composite et $\pm \delta_{min}$ détermine la plage de variation entre la valeur limite de densité supérieure $\rho^*_4$ et la valeur limite de densité inférieure $\rho^*_3$, dans lequel la valeur absolue de $\delta_{min}$ est $\geq 0,005$.

4. Matériau composite selon la revendication 1, dans lequel le silicium est au moins partiellement cristallin.

5. Procédé pour la fabrication d'un matériau composite selon l'une des revendications 1 à 4, comprenant les étapes suivantes :

   a) fourniture de silicium
   b) fourniture d'au moins un précurseur de carbone
   c) préparation d'un mélange comprenant les composants des étapes a) et b) et
   d) production du matériau composite par traitement ultérieur du mélange de l'étape c) comprenant un traitement thermique et un broyage.

6. Procédé selon la revendication 5, dans lequel le précurseur de carbone de l'étape b) est choisi dans le groupe constitué de brai, goudron, biomatériaux, polymères et matières premières à base de résine comportant un rendement en carbone > 5 % ou mélanges de ceux-ci.

7. Procédé selon la revendication 5, dans lequel le mélange obtenu à l'étape c) est réparti de manière homogène et en ce que l'évolution de la température du traitement thermique et le broyage à l'étape d) sont adaptés au mélange obtenu à l'étape c) de sorte qu'un matériau composite conformément à la revendication 1 est obtenu.

8. Procédé selon la revendication 5, dans lequel, en plus des substances fournies lors des étapes a) et b), au moins un additif est fourni et le mélange préparé à l'étape c) comprend l'additif.

9. Procédé selon la revendication 8, dans lequel l'au moins un additif est un composant insoluble dans l'au moins un précurseur de carbone.

10. Procédé selon la revendication 8, dans lequel l'au moins un additif est un composant miscible avec le précurseur de carbone, choisi dans le groupe constitué de résines, polymères, initiateurs de polymérisation, agents de réticulation des polymères ou mélanges de ceux-ci.

11. Utilisation du matériau composite selon l'une des revendications 1 à 4 en tant que composant unique ou au moins un composant du matériau actif pour l'anode de batteries lithium-ion, de batteries lithium-soufre et/ou de batteries sodium-ion.

Figur 1a

Figur 1b

Figur 1c

Figur 1d

Figur 1e

Figur 1f

Figur 2a

Figur 2b

Figur 2c

Figur 2d

Figur 3a

Figur 3b

Figur 3c

Figur 3d

Figur 3e

# EP 3 646 401 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20130004846 A1
- US 2012244428 A1
- US 2015340687 A1
- US 20100035128 A
- US 20140266066 A1
- WO 2008139157 A1
- WO 2001096847 A1
- DE 102013211388 A1
- EP 1730800 A2

- US 7871727 B2
- US 7906238 B2
- US 9281129 B2
- JP 2011142021 B
- WO 2014095823 A1
- EP 2430686 B1
- US 6143216 A
- US 20140234721 A1
- JP 2012084521 B